Europäisches Patentamt

European Patent Office

Office européen des brevets

(19)

(11) Publication number: **0 216 170**
**A2**

(12) # EUROPEAN PATENT APPLICATION

(21) Application number: 86111766.1

(22) Date of filing: 26.08.86

(51) Int. Cl.⁴: **G 06 F 15/16**
**G 06 F 13/16**

(30) Priority: 24.09.85 US 679805

(43) Date of publication of application:
01.04.87 Bulletin 87/14

(84) Designated Contracting States:
DE FR GB IT

(71) Applicant: International Business Machines Corporation
Old Orchard Road
Armonk, N.Y. 10504(US)

(72) Inventor: Camacho, Barbara Jenkins
6547 Leyland Park Drive
San Jose California 95120(US)

(74) Representative: Ahlman, Bertel et al,
IBM Svenska AB Intellectual Property Department Box
962
S-18 109 Lidingö(SE)

(54) Storage management method and system in a multiprocessor environment.

(57) A system and method for managing a plurality of mass
storage volumes associated with a multiprocessor computer
system. Control is allocated to nodes (200, 210, 220, 230)
which communicate through a commonly accessible mass
storage device (100). A plurality of worker nodes (200,210,220)
recognize needs for performance of certain storage mana-
gement functions and communicate those needs to a storage
node (230) through transmission of signals to the commonly
accessible storage medium. The storage node then retrieves
these signals from the commonly accessible storage medium
and performs the needed functions. Notification of comple-
tion may be communicated to the recognizing worker node by
transmission of signals from the storage node to the com-
monly accessible storage medium. Recognizing worker
nodes then retrieve these notification signals to complete the
communication path.

_Fig. 1A_

STORAGE MANAGEMENT METHOD AND SYSTEM
IN A MULTIPROCESSOR ENVIRONMENT

## Table of Contents

Documents Incorporated By Reference

Field of the Invention

Background Art

Glossary

Summary of the Invention

Brief Description of the Figures

Detailed Description of the Invention

Interconnected Hierarchical Storage Manager
IHSM Logic Arrangement

Work Flow
Storage Spaces or Domains
Centralized Request Service
Queue Data Set 10
Management Work Element
Interleaved Asynchronous Queues
Enqueuing Management Work Elements
Initialization Processing
      Worker Node-Initialization
      Storage Node-Initialization
Worker Node-Retrieve Management Work Elements
Worker Node-Complete Management Work Elements
Storage Node-Retrieve Work To Do
Storage Node-Complete Management Work Elements

Claims

Abstract


Documents Incorporated By Reference


1.    "Managing Data Storage Devices Connected To A
Digital Computer", U. S. Patent Application
Serial Number 570,054, filed January 12, 1984.

2.  IBM Publication: GH35-0007-6 - "OS/VS2 MVS
    Hierarchical Storage Manager: General
    Information", Program Number 5740-XRB, 1980.

3.  IBM Publication: SH35-0023-1 - "OS/VS2 MVS
    Hierarchical Storage Manager System Programmer's
    Reference and Operations Guide", Program Number
    5740-XRB, 1978.

4.  IBM Publication: SH35-0024-1 - "OS/VS2 MVS
    Hierarchical Storage Manager: User's Guide",
    1978.

The above-identified publications are available
from International Business Machines Corporation,
Armonk, New York.

## Field of the Invention

The present invention relates to machine-implemented management of data storage space in a data processing environment.

0216170

## Background Art.

In complex data processing installations, host processors generally have a relatively large number of peripheral data storage devices for storing data to be used in connection with host processor operations. In order to increase the efficiency of data storage device use, various levels of priority are assigned to these data storage peripherals. A group of high performance data storage devices is designated "primary storage" and is used by the host processor to store that data which is most frequently accessed by users of the computer and by the operating system. Such primary storage device is both high performance and high cost. A second group of data storage devices is designated as "secondary storage" and is used to maintain lower priority data until such data is either recalled to primary storage or migrated still further to lower levels of the data storage hierarchy.

The term "migration" means a data transfer from a more rapid-access higher cost peripheral data storage device to a slower-access lower cost peripheral data storage device. The migrated data is less frequently used data which is therefore demoted to a lower performance data storage device having a lower cost per byte of storage. The reverse operation, "recall", transfers data to the higher performance higher cost device when it is accessed by a process executing on the host processor. Such recall is also known as "data promotion". Migrate and recall are two functions which may be performed by a host computer system in order to optimize the use of data storage space relative to the tasks being performed. Such optimization requires the management of peripheral data storage devices in order to organize the data stored thereon.

When data is migrated it is reformatted and compressed to conserve space on the migration data storage device. This also defragments migrated data sets. When data is recalled it is restored to its uncompressed form.

"Backup" and "restore" are two additional functions performed in data processing installations. Data residing on one storage medium is often copied to a second, less costly storage medium as a "backup" in case of system failure or logical error by the user. Typically, such backup media are magnetic tapes which are then stored in a secure location. In the event of a system failure or logical error by the user which corrupts data stored on a system data storage device which is "on line" such as a magnetic disk, the backup tape is reloaded to the storage device in a "restore" process. Optionally, other media may be used as the destination of a backup operation.

0216170

Large data processing installations generally use a type of system software known as an "Access Method" to control access to data storage peripherals by tasks executing in the host processor. In a typical case, (Virtual Sequential Access Manager by IBM Corporation - VSAM), each task, known as a "User," was allocated a certain area for storage in a data storage peripheral device. A by-product of such allocations and de-allocations of storage areas was "fragmentation". Fragmentation of data occurs when many small pieces of a data become scattered on the device as a result of many sequential allocations and de-allocations of storage space by the access method. When data set fragmentation occurs, data is stored in a mannner which leaves a number of unused storage spaces, many of which are relatively small. As a result, access to the data set becomes inefficient and the host processor has a reduced ability to assign peripheral storage locations for data storage because the available spaces are too small to store the data. Therefore, fragmentation decreases the efficiency of the peripheral data storage space by reducing usable space and it increases access time to the stored data. Data set fragmentation not only increases access time and results in inefficient use of space on a given data storage device, if the device is a magnetic disk, it may also cause "head thrashing" (rapid and oscillatory motion of the read/write head).

An important function in the management of any peripheral data storage device is therefore the periodic "defragmentation" of data sets stored on the device in order to improve the efficiency of the overall system by joining the numerous small areas of the data set into relatively large areas of contiguous storage.

The program product "Hierarchical Storage Manager" (HSM), described in the Documents Incorporated by Reference, performs the above functions in a host processor. HSM is a program which continually executes on a host processor to manage a variety of data storage peripherals in accordance with a hierarchy dictated by the operator of the data processing installation. For example, HSM manages data storage spaces in a variety of direct access storage devices, a mass storage system such as the IBM 3850 Mass Storage System, and magnetic tape data recorders.

Under HSM, various levels of peripheral data storage space were provided. A set of data storage devices called primary storage was a data storage space where the various application programs executing in host processors accessed the needed data. The HSM program optimized the use of the primary data storage space by migration and recall. In HSM, several control data sets were employed by the host processor. In a multiprocessor installation, such control data sets serialized control functions for management of the various peripheral data storage devices and for coordinating operations of the host processors with respect to the various peripheral data storage devices.

A plurality of "user exits" in the HSM program facilitated host computer operation with HSM for more efficiently managing its functions. Additionally, These user exits are locations within HSM from which external system software may be accessed. Additionally a group a data storage devices could reside outside the control of HSM and therefore were not automatically managed or controlled by HSM. Such data storage devices continued to be accessed by prior access techniques such VSAM and were unaffected by the automatic actions of HSM. Under operator control however, HSM could be given effective control over these devices and could then manage their storage of user data as it would any other data storage peripheral device.

HSM was also capable of controlling the peripheral data storage devices in a multiprocessor complex in which the data storage volume managing program was executed simultaneously and independently on any one or more than one of the host processors in the multi-host environment. In this HSM environment, a common data set was shared by the host processors for coordination of the management functions performed. However, the mechanisms of such control were in addition to the standard single processor execution environment of HSM.

The common data set which HSM created and maintained to coordinate the actions of several host processors having concurrent and overlapping access to a plurality of data storage peripherals was the "Control Data Set." The Control Data Set resided on a data storage peripheral which was commonly accessible to all host processors in the multiprocessor complex. When there was contention between hosts for a data storage volume, the contention was resolved by having the locked out host select a different volume.

Whenever a host recall task needed a migration volume currently used by another migration task in another host, the host computer seeking the recall signalled the other host that a recall task was waiting for the volume. The migration task in the host having access rights to the volume released the volume to the recall task and selected another target migration volume to continue the migration operation. In the multiprocessor environment, multiple copies of HSM were simultaneously and asynchronously executed on each of the processors in the complex. There was no inherent coordination of the control process and no inherent coincidence of controlled data storage peripherals. Only by a parallel installation of each of the executing copies of the HSM program could an overlap of domains be created.

To assure that such an overlapping system avoided conflicts within the multiple simultaneous executions of HSM, all copies of HSM within the complex were instructed to use the control data set which was commonly accessible to all processors. At the data set level this data set was locked during update access by any one of the several HSM programs, and was therefore the coordinating link among all of the copies of HSM executing in the multiprocessor complex.

Thus, as a result of the use of a common Control Data Set, all HSM processes were required to wait for control of the data set to pass in order to take an action because during update access by any one of the copies of HSM executing in the multiprocessor complex, all others were required to wait for access to the data set. The "serialization" of access to the control data set created delays in the operation of HSM in a multiprocessor environment but has heretofore been unavoidable because of the need to coordinate the activities of all the separate HSM programs within the system. In addition, multiprocessor operations under HSM did not have data storage peripherals which were truly global to the entire multiprocessor complex at all times. Data on a volume which was exclusively available to one host could only become available to other hosts by moving the data to another volume. In some instances, this was inefficient.

Efforts have been made in the prior art to control and coordinate the activities of multiple asynchronous processes executing in a plurality of host processors. Commonly, such efforts involve some sort of arbitration of priorities among the various processes, or a detection or avoidance of collisions between the actions of the plurality of processes seeking access to the data storage devices.

U. S. Patent No. 4,118,771 to Pomella et al describes a numerical control system for the control of machine tools. In Pomella, two processors operated simultaneously and asynchronously to both position certain parts of the machine and to control the work of the tool. These activitities were guided and the processors interconnected through a common signal bus. The two processors share common random access memory as well as peripheral devices such as a keyboard, display and tape drive.

U. S. Patent No. 4,413,318 to Herrington discloses a technique employing "nodes" to uniquely identify processes in a multiprocess machine. In the multiprocessor environment of Herrington, any processor could assign a task to any node or subnode in the entire system, communicating with other processors via a data bus. In the Herrington system, each processor (primary node) could have one or a plurality of subnodes, each of which could consist of one or a plurality of processes (tasks). Nodes were addressed by reference to a Node Address Table stored in system memory accessible to all primary nodes, which in turn was composed of a plurality of Process Address Tables for each process within a subnode, coupled with a Lock Control Block for controlling access to its associated process.

U. S. Patent No. 4,445,197 to Lorie et al describes a method of resolving contention among plural concurrent asynchronous properties by "bid resolution." In the disclosed system, those processes needing access to a particular shared resource in a computing system submitted signals, which were likened to bids, to a common bid resolution circuit. The submitting processes waited for the bid resolution circuit to acknowledge the bid and grant a given processor access to the desired resource.

Finally, various systems have been used for providing supplementary job management, data management, and task management functions such as control of job flow, ordering of tasks, and spooling within a multi-processor data processing environment. Among these systems are HASP, HASPII, JES2, and JES3, all of which operate on IBM processors to provide supplementary system management functions.

-14-

0216170

## Glossary

automatic backup. In HSM, the process of automatically copying eligible data sets from primary volumes or migration volumes to backup volumes during a specified backup cycle.

automatic migration. In HSM, the process of automatically moving eligible data sets from primary volumes to migration level 1 volumes or from migration level 1 volumes to migration level 2 volumes as determined by the system.

backup. In HSM, the process of copying a data set residing on a primary volume, level 1 volume, or a volume not managed by HSM to a backup volume.

backup control data set. A VSAM, key-sequenced data set that contains information about backup versions of data sets, backup volumes, and volumes under control of the backup function of HSM.

backup volume. A volume owned by HSM to which backup versions of data sets are written.

DASD. Direct access storage device. A device in which the access time is effectively independent of the location of the data.

data set deletion. In HSM, the space management technique of deleting expired data sets that have not been referenced for a specified number of days.

data set retirement. In HSM, the space management technique of deleting data sets that have not been referenced for a specified number of days, that have a current backup version.

level 0 volume. A primary volume or a user volume not managed by HSM.

level 1 volume. A volume managed by HSM containing data sets that migrated from a level 0 volume.

level 2 volume. A volume under control of HSM containing data sets that migrated from a level 0 or level 1 volume.

managed space. The storage space on a set of volumes commonly accessible to the storage node and one or more other nodes from which space HSM migrates and backs-up data sets and to which HSM recalls and restores data sets.

migration. The process of moving a cataloged data set from a primary volume to a migration level 1 or migration level 2 volume, from a migration level 1 volume to a migration level 2 volume, or from a volume not managed by HSM to a migration level 1 or migration level 2 volume.

migration control set. A VSAM, key-sequenced data set that contains statistics records, control records, user records, records for data sets that have migrated, and records for volumes under migration control of HSM.

migration volume. An HSM-managed volume that contains data sets that have migrated.

MSS. 3850 Mass Storage System, International Business Machines Corporation.

non-HSM controlled volume. A volume not defined to HSM containing data sets that are directly accessible to users.

offline control data set. In HSM, a VSAM, key-sequenced data set that contains information about tape backup volumes.

owned space. The storage space on a set of volumes to which HSM allocates migrated data sets and backup versions, but to which user jobs should not allocate. Included in this set are migration level 1, migration level 2, and backup volumes.

primary volume. A volume managed by HSM containing data sets that are directly accessible to the user.

recall. The process of moving a migrated data set from a level 1 or level 2 volume to a level 0 volume.

recovery. In HSM, the command process of copying a backup version of a data set from a backup volume to a specified volume or to the volume from which the backup version was created.

storage hierarchy. Storage devices, managed by HSM, that have different costs for storing data, different amount of data stored, and different speeds of accessing data.

See also: IBM Publication: GC20-1699-6 - "Vocabulary for Data Processing, Telecommunications, and Office Systems", 1981.

-18-

0216170

## Summary of the Invention

The present invention is defined in the attached claims.

In accordance with the present invention, data storage volume sharing is enhanced by designating one of the processors in a multiprocessor system as a storage node and designating the remaining processors as worker nodes. A worker node recognizes a service request originated by a process running within its host while the storage node is the service performer.

The recognized service request is transmitted to a commonly accessible storage medium by the worker node. The storage node retrieves the service request from the commonly accessible storage medium and performs the requested service. When the requested service has been performed, the storage node may transmit a notification of completion to the recognizing worker node. Thus, all communication between the worker nodes and the storage node proceeds through the commonly accessible storage medium.

Further in accordance with the present invention, data storage space is managed both automatically and by explicit commands including 1) data demotion or migration from primary data storage volumes to secondary data storage volumes, 2) data promotion or recall from such secondary data storage volumes, 3) data backup from primary or secondary volumes, and 4) data recovery from backup volumes to both primary and secondary storage volumes.


## Brief Description of the Figures

Figure 1A is a simplified block diagram illustration of a multihost data processing system having a plurality of peripheral data storage devices including migration and backup devices which are exclusively controlled by a single host in the system.

Figure 1B is a modified Venn diagram depicting spaces and domains which may be defined by the present invention.

Figure 2A illustrates the queue data set which is a common data set for the host processors to send communication data packets to the node which has exclusive control over the migration space and back up space of Figure 1A.

Figure 2B illustrates key fields of a communication data packet which may be enqueued in the queue data set of Figure 2A.

Figure 2C illustrates an example of the queue data set of Figure 2A in which a plurality of records containing the key fields of Figure 2B are stored.

Figures 3-5 are a simplified flow diagram illustrating the initialization and shut down processing of the simultaneously executed computer program in the host processors of the system of Figure 1.

Figures 6, 7 show a more detailed flow diagram illustrating the queue initialization of Figure 3 for one of the nodes not having exclusive control over the migration and back up space.

Figures 8, 9 show a more detailed flow diagram illustrating the queue initialization of Figure 3 for the node which has exclusive control over migration and backup space.

Figures 10-13 shows a more detailed flow diagram of the retrieving and processing of communication data packets of Figure 5 for one of the nodes which does not have exclusive control over migration and backup space.

Figures 14-17 are a more detailed flow diagram illustrating the retrieving and processing of communication data packets of Figure 5 for the node which has exclusive control over migration and backup space.

## Detailed Description of the Invention

Referring now to the drawings, like numerals indicate like parts and structural features. The invention is described as being practiced in a multi-host-processor data processing environment having a relatively large number of peripheral data storage devices of diverse types and capabilities. It is to be understood that the invention may be practiced with equal facility in a single host processor environment having a smaller number of peripheral data storage devices. The description of the invention is also based in part upon the documents incorporated by reference, which documents describe an existing program which provides many recall, migration, and other data-storage-management functions advantageously employed when practicing the present invention.

## Interconnected Hierarchical Storage Manager

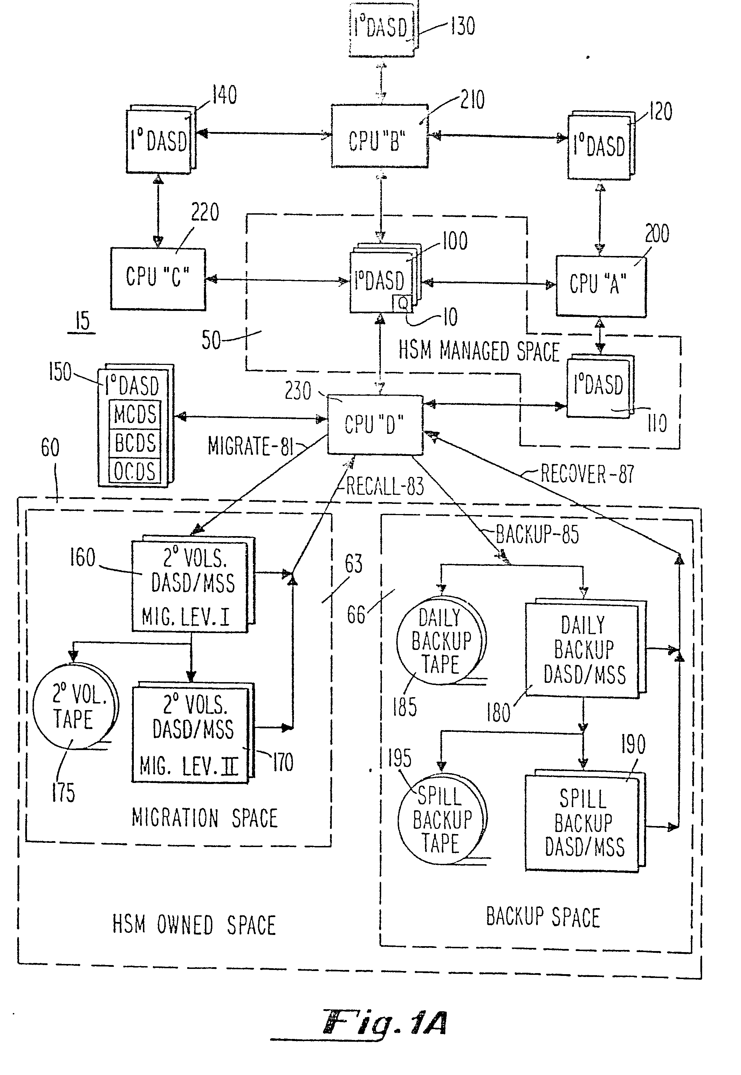

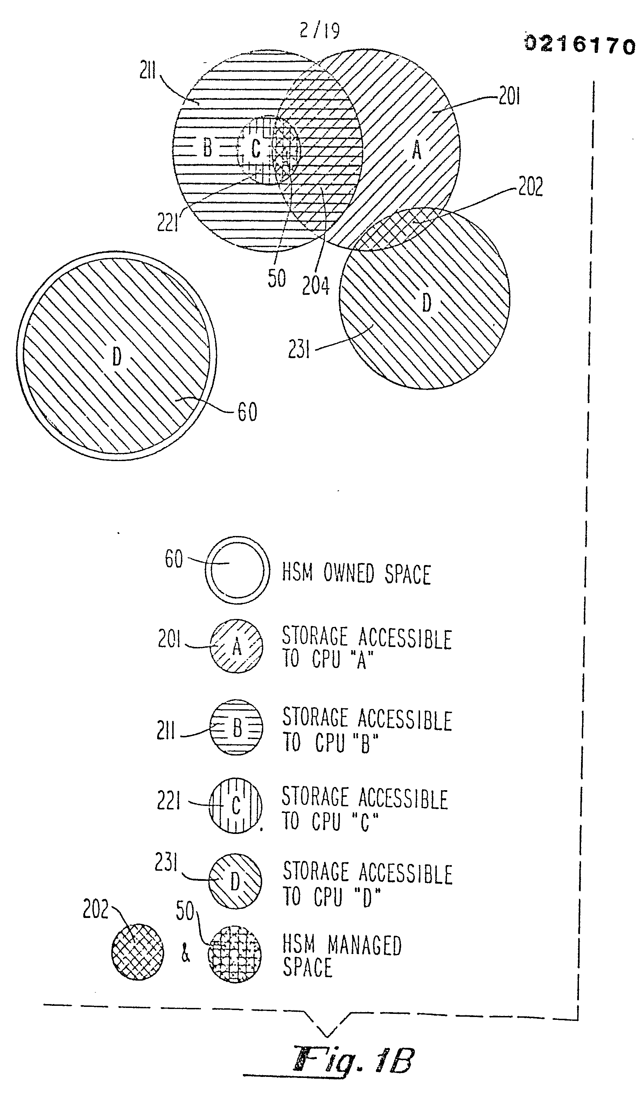

Hierarchical Storage Manager (HSM), as previously described, is a program which continuously executes on a host processor to manage a variety of data storage peripherals in accordance with the hierarchy dictated by the operator of a data processing system. In HSM each processor in a multi-processor system had access to peripheral storage devices containing migrated and backed up data sets. In Interconnected Hierarchical Storage Manager (IHSM) of the present invention, control over management of all peripheral storage devices as shown in Figure 1 containing migrated and backed up data sets is centralized in one node of the system and all communication between that node and each of the remaining nodes in the system passes through a single storage medium 100. The node which controls these peripheral storage devices exercises control using the prior HSM protocol. Thus IHSM may be understood to be a combination of the prior HSM system and a control layer above HSM which causes the prior HSM functions of all the nodes in a multiprocessor system to be performed by a single node in the system.

IHSM operates in a multiprocessor complex or multiprocessor system such as multiprocessor system 15 shown in Fig. 1A. Multiprocessor system 15 comprises four central processing units, CPU 200, CPU 210, CPU 220 and CPU 230 (CPUs A, B, C and D, respectively). Additionally, system 15 comprises primary volumes of DASD 110, DASD 120, DASD 130, DASD 140 and DASD 150 as well as secondary volumes 160, 170, 175 in migration space 63 and a plurality of backup volumes in backup space 66 in which backup volumes may be defined as being de-mountable and non-volatile. Spaces 60, 63 and 66 will later be defined. Primary volumes are volumes which are directly accessible, fastest and, usually, have the highest cost per unit of storage. Secondary volumes are usually slower and less expensive than primary volumes.

CPUs 200, 210, 220, 230 are interconnected and communicate with a plurality of direct access storage devices in a variety of ways. For example, in system 15, CPU 200 communicates with three primary DASDs: DASD 100, DASD 110 and DASD 120. Similary, CPU 210 communicates with four primary DASDs: DASD 100, DASD 120, DASD 130 and DASD 140. CPU 220 communicates with only two primary DASDs, DASD 100 and DASD 140. Finally, CPU 230 communicates with two primary DASD: DASD 100 and DASD 150, and with a large number of secondary volumes, some of which are DASD and some of which may include mass storage systems (MSS), tape, or other such devices. DASD/MSS 160 is an example of the secondary volumes with which CPU 230 communicates.

In system 15 the interrelationships of communication between CPUs and DASDs bring about certain shared storage relationships. CPU 200 shares primary DASD 110 with CPU 230. Information which resides on primary DASD 110 is therefore accessible (although not simultaneously) to both CPU 200 and CPU 230. Similarly, DASD 120 is shared between CPU 220 and CPU 210. Primary DASD 140 is shared between CPUs 200 and 210 and primary DASD 100 is shared by all CPUs: CPUs 200, 210, 220, 230. Primary DASD 130 is exclusively accessible to CPU 210. DASD 150 is exclusively accessible to CPU 230.

Because of the relationship of CPUs and their associated direct access storage devices, a shared element of the system is able to transmit information among all CPUs within system 15. This shared element is queue data set (QDS) 10 which is a specialized data structure residing on primary DASD 100 and accessible to all CPUs. Queue data set 10 is at various times written-to or read-by all of the processors in multiprocessor system 15 and serves as a communication/storage medium between processors. As distinguished from queue data set 10 on primary DASD 100, none of the other direct access storage devices within system 15 are accessible to all CPUs and therefore none of the other storage devices may act as a universal communication medium.

CPU 230 also has exclusive access to primary DASD 150 and it is on DASD 150 that IHSM builds and retains its various control data sets (described below). In addition, CPU 230 has unique access to and control over various other storage devices in HSM owned space 60 including secondary volumes of DASD and mass storage 160, secondary tape volumes 175 and further secondary volumes of direct access storage or mass storage 170. In addition, tape 185, backup

DASD/MSS 180, spill volumes 195 and spill backup DASD/MSS 190, all in backup space 66, are uniquely accessible to and controlled by CPU 230. In this way, CPU 230 has a wide variety of resources available for the migration, backup, recovery, and recall of information.

For ease of discussion, CPU's 200, 210, 220 and 230 may be considered to be separate physical processors which run single programs as single processors not running under any virtual operating system or simulating any virtual devices. However, in another embodiment operation as virtual devices may be used. A single physical CPU may contain several virtual machines under an operating architecture such as VM 370 from IBM Corporation. Thus, for example, CPU 200 and CPU 230 in system 15 could operate within the same physical CPU.

Similarly, DASD within system 15, for example DASD 110, 120, 130, 140, and 150, may be considered to be physically separate devices. However a plurality of spaces may be defined to reside on a single physical device. For example, DASD 110 and 120 may be defined to be two separate partitions within a single direct access storage device.

## IHSM Logic Arrangement

Because of the interrelationships between and among CPUs 200, 210, 220, 230 in multiprocessor system 15 and their accessibility to or control over various storage devices, certain logical spaces evolve under the control of IHSM. For example, IHSM defines space 60 which is owned by HSM. HSM owned space 60 is further subdivided into two spaces, migration space 63 and backup space 66. Spaces 63,66 are logical domains containing certain logical storage devices. Logical domains may be coextensive with certain physical devices but this is not necessary.

In system 15, CPU 230 has exclusive access to and control over HSM owned space 60. CPU 230 is therefore designated as the storage node. The remaining CPUs, 200, 210, 220, are designated as worker nodes. IHSM runs concurrently on all CPUs in system 15 and is designated, within each CPU, as running in either the storage node capacity, for example in CPU 230, or the worker node capacity, for example in CPUs 200, 210 or 220.

A second space defined by the executions of IHSM is space 50 which is managed by HSM. HSM managed space 50 encompasses both primary DASD 100 and primary

0216170

DASD 110. HSM may use space 50 for the control and disposition of data sets. Data sets which reside within HSM managed space 50 may be transferred to and from HSM owned space 60 under control of IHSM. DASD which do not reside within either HSM owned space 60 or HSM managed space 50, (for example DASD 120, 130, 140) are referred to as being in non-HSM space or as non-HSM devices and such DASD are not automatically controlled by or accessible to IHSM.

Data sets may be transferred from one space to another, under the control of CPUs 100, 210, 220 which have access to both HSM managed space 50 and non-HSM space. This permits IHSM to attain control over data sets which do not reside within HSM owned space 60 or HSM managed space 50. Spaces 50, 60 are denoted as HSM spaces because IHSM, the present invention, defines them in the same manner that HSM defined them.

CPU 230 or storage node 230 maintains a device uniquely accessible to itself for the maintenance of control data sets. As previously described, this device is DASD 150. The control data sets serve as directories which assist IHSM in keeping records of its activities. These directories are depicted in primary DASD 150 as the migration control data set (MCDS), backup control data set (BCDS) and off-line control data set (OCDS). The MCDS, BCDS, and OCDS provide CPU 230 and its execution of IHSM with information regarding the locations of various data sets managed by IHSM.

## Work Flow

Within multiprocessor system 15, the storage media constituted by direct access storage device 100 within HSM managed space 50 provides the only permitted path for data communication from one CPU to another. In particular, queue data set 10 on DASD 100 provides the only path of communication from each execution of the IHSM program designated to run in the worker node capacity to that execution of IHSM designated to run in the storage node capacity. The execution of the IHSM program designated to run in the storage node capacity in system 15 is the execution running in CPU 230 as previously described.

Information communicated through queue data set 10 represents storage management functions or service requests which are to be acted upon by the storage node execution of IHSM. These storage management functions or service requests are originated within CPUs 200, 210, 220 and 230 and flow through queue data set 10 exclusively to the storage node which operates in CPU 230. This information is communicated in a form of communication data packets called management work elements.

Service requests originating in each of the plurality of CPUs and transmitted to queue data set 10 are read by the storage node execution of IHSM, CPU 230. IHSM working as the storage node in CPU 230 retrieves and performs the requested service. ·After performance of the requested service, the storage node transmits notification of service completion back to queue data set 10. Other executions of IHSM, the worker nodes originating the requests for service, may then retrieve such notification and pass notification to the originating task within the originating CPU, thus completing the communication loop.

The work flow thus begins with the recognition by a worker node that a certain manipulation of a data set must be performed. For example, a user program operating on CPU 200 which requires access to a previously migrated data set may notify IHSM operating within CPU 200 of its requirement for that data set. IHSM operating within CPU 200, upon recognizing that such a service is to be performed for the originating program, transmits the service request to queue data set 10 on storage medium 100.

Asynchronously, the storage node function of IHSM operating in CPU 230 retrieves the service request which had previously been enqueued on queue data set 10 by CPU 200, acts upon the request to recall the data set to the proper location and subsequently transmits to queue data set 10 a notification of completion of the service request. After performance of the request and recall of the data set, IHSM operating as a worker node within CPU 200·retrieves the notification from queue data set 10 and notifies the user program operating within CPU 200 of the recall of the data set. The user program which required the requested data set would then continue its processing.

Data flows within IHSM may be requested by user programs or may be scheduled internally within IHSM. For example, a system running IHSM may perform backup or recovery functions at a specific time each day or after a specific amount of time has elapsed since last access or activity on a given data set. Such function requests are undifferentiated in their treatment by the storage node. They are transmitted to queue data set 10 and retrieved by the storage node execution of IHSM on CPU 230. These services are performed and notification is transmitted if appropriate.

Work flows originating asynchronously within the several processors are thus directed inwardly to a single point, queue data set 10, and from queue data set 10 to storage node 230 where they are processed. In this way, recognition and transmission of a request for service is centrallized and duplication of effort by multiple nodes with multiple access to certain devices is eliminated. CPU 230 has exclusive access to and control over HSM owned space 60 where all secondary volumes of storage reside. Therefore, all information entering or leaving HSM owned space 60 is controlled by CPU 230. HSM managed space 50 however may have multiple access devices such as DASD 100, 110 which provide for various levels of interaction between CPUs and various levels of efficiency in data storage.

The service functions which CPU 230 may perform include i) migration, which is the moving of data from a high cost or high performance device to a lower cost or performance device, ii) recall which is the converse operations, iii) backup which is the copying of data to lower cost, higher security devices to prevent losses of data due to system failure or logical error, and iv) recovery, which is the converse operation of backup.

When a migration service request is performed by storage node 230, data is migrated through data path 81 to secondary volumes 160, 170, 175 within migration space 63. When a recall request is performed data is recalled from migration space 63 through data path 83. A backup request causes storage node 230 to transmit data to volumes 180, 185, 190, 195 within backup space 66 by data path 85. Data is recovered from backup space 66 through data path 87 when a recover service request is performed by storage node 230.

A further function of the work flow within IHSM in multiprocessor system 15 is that of controlling the fragmentation of data across the various regions and spaces defined by IHSM. A single data set may be managed by IHSM to prevent such fragmentation. The data set may be retained in one place on one particular physical device to prevent or cure fragmentation. Such prevention or curing of fragmentation contributes to overall speed of operation of IHSM.

## Storage Spaces or Domains

Referring now to Fig. 1B, a modified Venn diagram is shown depicting spaces and domains which may be defined by IHSM. In Fig. 1B spaces are labelled A, B, C or D to show their correspondence to CPUs 200, 210, 220, 230 respectively which are labelled in like manner in Fig. 1A. In a multiprocessor system running IHSM, any CPU may have a DASD to which it has exclusive access. For example, in system 15, Fig. 1A, CPU 210 has exclusive access to DASD 130. Additionally, a DASD within a system running IHSM according to the invention may be shared by any two or more CPUs. For example, DASD 120 is shared by CPUs 200, 210. Accordingly, the universe of all configurations which are possible within a system which is executing IHSM is large. The configurations which fall within the scope of Fig. 1B are a subset of this universe of possible configurations. Furthermore, the configuration of system 15 shown in Fig. 1A is a subset of the configurations which fall within the scope of Fig. 1B. Thus systems other than system 15 may also fall within the scope of Fig. 1B and Fig. 1B does not exhaust all the configurations possible under IHSM.

Therefore, Fig. 1B shows several logical domains, only some of which have physical counterparts in the specific architecture of Fig. 1A. For example, Fig. 1B depicts a domain of storage exclusive to CPU 200, space 201, while no such physical device is present in Fig. 1A. Additionally, a system running IHSM may include a plurality of DASDs which are shared by all CPUs within the system while system 15 references only one such commonly accessible DASD,

DASD 100. However only one queue data set 10 is permitted.

Space 201 is that space having hashing in only one direction and is accessible exclusively to CPU 200. As previously described, space 201 is permitted by IHSM but not implemented in system 15 in which CPU 200 does not have exclusive control over a DASD. Space 211, having hashing in only one direction, is that space exclusively accessible to CPU 210. Space 211 corresponds to DASD 130. Doubly hashed space 204 is space which is available to both CPUs 200, 210 and corresponds to DASD 120.

Space 221 resides entirely within the space accessible to CPU 210 and corresponds to DASD 140 is which DASD 140 is accessible to CPU 220 and is one of a plurality of devices accessible to CPU 210. In a system in which CPU 220 had exclusive access to its own DASD (not shown), space 221 would not reside entirely within other spaces. Space 231 is space which is accessible to CPU 230. Space 202 is available to both CPUs 200, 230 and corresponds physically to DASD 110.

Space 50 is accessible to all CPUs 200, 210, 220, and 230 (by extension of the diagonal hashing characteristics of space 231 of CPU 230). HSM managed space 50 is that space into which and from which HSM may place and receive data sets. DASD 100, the commonly accessible DASD, is in HSM managed space 50. DASD 110 is accessible to CPU 230 and therefore may be HSM managed space even though it is not commonly accessible. Queue data set 10 must reside within space 50. Doubly walled space 60 is that space which is uniquely accessible to CPU 230 and is HSM owned space. Space 60 includes both HSM migration space 63 and HSM backup space 66.

As shown in Fig. 1B, certain overlaps of storage are possible and the possible universe of storage spaces and domains is large. However, a requirement for the operation of HSM is that there both be 1) some region, for example DASD 100 of system 15, which is accessible to all processors and 2) some region, for example space 60, which is accessible only to that processor which contains the execution of IHSM designated as the storage node.

## Centralized Request Service

Servicing of requests begins with recognition by the various worker nodes within system 15 of service tasks to be performed as previously described. Following such recognition, worker nodes 200, 210, 220 communicate to a single central service performer which performs the task. In IHSM such communication involves the generation of a service request which is transmitted through storage medium 100 containing queue data set 10. The single service performer, in this case CPU 230, performs the various requested tasks. After performing the tasks and depositing the data in the appropriate location or retrieving data from the appropriate location, CPU 230 notifies the requestor of the completion of the task.

In this way, work flow which is recognized by multiple processes operating asynchronously and apart from the performer of the service, communicate those requests asynchronously to a single centrally located performer for completion. Upon completion, asynchronous notifications of completion are passed back to the requestors. Thus centralized performance of work is followed by notification asynchronously to various requestors in the multiprocessor asynchronous environment.

The use of storage medium 100 as a communications device, through which all communications between processors must pass, is an important concept in IISM. The enqueueing and dequeueing of communication data packets on queue data set 10, maintained on storage medium 100, allows for minimum serialization delays which might otherwise be found within such a system. The recognition and transmission of requests to a central location for performance by a more efficient processor having exclusive control of all resources necessary for the performance of requested service eliminates many delays and conflicts inherent in prior art systems.

A major benefit of the use of queue data set 10 located within a central storage medium, for instance DASD 100, is that the use of such a storage-based queue is non-volatile and leads to extremely fault-tolerant behavior and enhanced recovery capability in the event of failure. Other prior systems employing volatile communication techniques, even if checkpointed, cannot offer the recoverability or ease of operation of such a storage based communication means. For this purpose, a volatile communication technique is defined as a technique which stores its communication data packets on media which are reset to an indeterminate state upon failure. A non-volatile communication technique is defined to include a technique which permits retention of its information during system failure.

## Queue Data Set 10

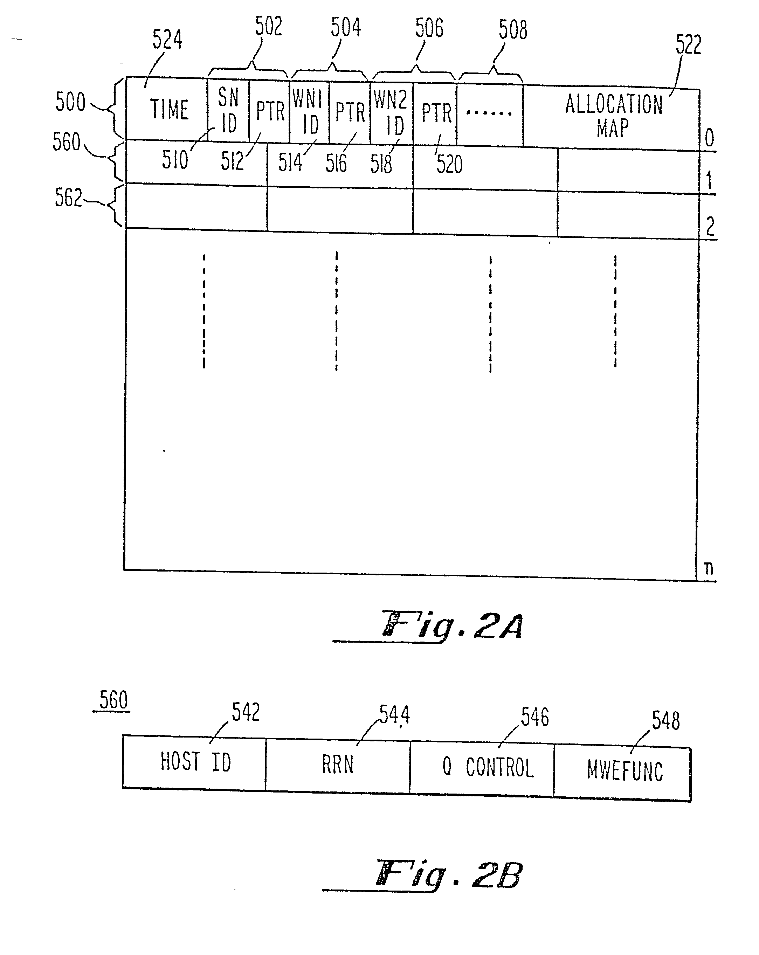

Referring now to Figs. 2A,B, there is shown queue data set 10 within DASD 100 and management work element 560. Asynchronous processes operating in the worker nodes of a multiprocessor system communicate with the storage node by storing management work elements, such as management work element 560, in queue data set 10. A management work element is a form of data communication packet. Therefore queue data set 10 must reside in a commonly available storage medium. When a management work element is serviced by the storage node, it is posted to the requesting worker node through queue data set 10 by the storage node. Thus all communication between the worker nodes and the storage node takes place through queue data set 10. In an alternate embodiment (not shown), a single device may perform the functions of CPU 230 and DASD 100 of Fig. 1A and therefore contain queue data set 10.

Fig. 2A shows control data set 10. Data set 10 is a Virtual Storage Access Method (VSAM) file which supports a plurality of queues: a DASD request queue which is reviewed by the storage node 230 and one work complete queue for each active worker node including worker nodes 200, 210 and 220. Queue data set 10 begins with control record 500 as do all VSAM files. Control record 500 comprises a plurality of fields including activity time stamp field 524. Activity time stamp field 524 is updated by the storage node 230 each time storage node 230 accesses queue data set 10. Each time activity time stamp field 524 is written by the storage node 230, storage node 230 enters the time at which queue data set 10 is accessed. Activity time stamp field 524 is checked periodically by each worker node to determine whether the storage node is active. In this way, a malfunction of the storage node 230 may be detected by determining the age of most recent time entry in field 524. For example an entry in field 524 which is more than five minutes old may be interpreted as a malfunction of storage node 230.

Control record 500 also includes a storage node segment 502. Storage node segment 502 includes two fields: storage node host ID field 510 and work to do pointer field 512. Storage node host ID field 510 identifies which of the plurality of IHSM executions within multiprocessor system 15 is to function as the storage node. Storage node work to do pointer 512 is a relative record number pointer which indicates the location within queue data set 10 of the last work assignment added to the storage node's Last-In, First-Out (LIFO) queue.

For each worker node in the system there is a worker node segment within control record 500 which is similar in structure to storage node segment 502. For example, there is a worker node segment 504 for worker node 1. Worker node segment 504 contains worker node 1 host ID field 514 and worker node 1 work completed pointer field 516. Worker node host ID field 514 contains an identification of the IHSM execution within the multiprocessor system which is designated as worker node 1. Worker node 1 work completed pointer 516 is a relative record number which points to the relative record containing the most recent work assignment which was completed by storage node 230 for worker node 1 and consequently the last management work element in worker node 1's LIFO queue.

Worker node segment 506 contains the same information for worker node 2 as worker node segment 504 contained for worker node 1. Worker node 2 host ID field 518 identifies the IHSM execution designated as worker node 2. Worker node 2 work completed pointer field 520 indicates the most recent entry into worker node 2's queue. Fields 508 of control record 500 may contain a plurality of additional worker node segments each having a worker node host ID field and a work completed pointer which correspond to additional worker nodes (not shown) in the system and their LIFO queus. Five such additional worker node segments are permitted in fields 508 for a total of seven worker node segments within control data set 500.

## Management Work Element

Referring now to Fig. 2B, management work element 560 is shown. Management work element 560 is one of a plurality of management work elements which may be stored in the relative records of control data set 10. As previously described, management work elements are data communication packets which are produced by IHSM nodes to indicate to storage node 230 that a particular IHSM function is required. These functions include such operations as a recall, recover, migrate or backup.

Management work elements are placed in queue data set 10 by IHSM nodes to request execution or report completion of a designated operation. Management work elements are added to queue data set 10 by worker nodes. A management work element is added to queue data set 10 by appending it to the storage node's work to do queue.

Management work element 560, as well as all other management work elements within queue data set 10, includes four fields. Host ID field 542 is used by a worker node making a work request to identify itself as the originator of the request. Relative record number field 544 contains a reverse pointer for linking management work element 560 to a queue. Thus, relative record number field 544 contains the relative record number of the management work element which immediately precedes management work element 560 in a work to do queue.

For example, management work element 562 is the second management work element after control record 500 within control data set 10. If management work element 562 is at the end of a queue to which management work element 560 is to be added, then 2, the relative record number of management work element 562, is placed in relative record number field 544 of management work element 560. Thus a succession of reverse pointers within a plurality of relative record number fields 544 within a plurality of management work elements may link the plurality of management work elements into a LIFO queue. Queue control field 546 is a single bit or flag which indicates that a management work element has been recorded within queue data set 10 as a part of a queue. Thus all queue control fields 546 of the storage node queue and of all the worker node queue management work elements are high.

MWEFUNC field 548 is used by a worker node to indicate to the storage node 230 which function is requested by the management work element. For example, a 3 in MWEFUNC field 548 may indicate to the storage node that a recall is requested by a worker node, a 5 may indicate that a recover is requested, a 6 may indicate that a migrate is requested.

Each active host processor within IHSM has its own queue within queue data set 10. All queues are LIFO. The storage node LIFO queue defines the work to be performed by storage node 230. All of the worker nodes may write to the storage node LIFO queue. Each worker node also has its own LIFO queue. These worker node queues represent work that has been completed by storage node 230 on behalf of the worker nodes. Each worker node queue is written-to by. the storage node 230 as the storage node completes a requested operation.

## Interleaved Asynchronous Queues

Referring now to Fig. 2C, there is shown an example of queue data set 10 containing three queues of management work elements: a storage node work to do queue, a worker node 1 work completed queue, and a worker node 2 work completed queue. Relative records 560-14 through 592-32 are available to the storage node and the worker nodes to form these queues. The number of management work elements shown, seventeen, is chosen for illustrative purposes only. In general, queue data set 10 may include any number of management work elements. The first three digits of the reference numerals which record or identify management work elements within queue data set 10 sequentially record or identify management work elements 560-14 through 592-32 with respect to their position within queue data set 10.

The last two digits of these reference numerals identify the queue of each management work element and the position of the management work element within the queue. The first of the last two digits may be a 1, indicating that a management work element is in the storage node queue, a 2, indicating that a management work element is in the worker node 1 (WN1) queue, or a 3 indicating that a management work element is in the worker node 2 (WN2) queue. The last digit of the reference numerals which identify the management work elements of queue data set 10 indicates the position of the management work element within its own queue. A 1 in the last digit represents the first management work element in the queue, a 2 represents a second and therefore more recently added management work element within the queue, etc.

The first management work element in queue data set 10 is management work element 560-14. This indicates that management work element 560-14 is in the storage node queue because there is a 1 in the first digit position after the dash in the reference numeral and that it is the fourth element within the storage node queue because there is a 4 in the second digit position after the dash. Similarly, management

work element 574-31, in the eighth relative record in queue data set 10, is in the worker node 2 queue as indicated by the 3 in the first digit following the dash. It is the first, and therefore the oldest, element in the worker node 1 queue as indicated by the 1 in the last digit position of the reference numeral.

To determine the contents of the storage node queue, the relative record number in storage node work to do pointer field 512 of queue record 500 is followed. The pointer in field 512 points to the management work element most recently added to the storage node queue. Field 512 of control record 500 contains 15 thereby pointing to the fifteenth relative record of queue data set 10. The fifteenth relative record of queue data set 10 contains management work element 588-16.

Host ID field 542 of management work element 588-16 indicates that management work element 588-16 was placed into the storage node queue by worker node 2. Queue control field 546 of management work element 588-16 contains 1 indicating that relative record 15 contains an active management work element which is on a queue. MWEFUNC field 548 of management work element 588-16 contains a 3 indicating that worker node 2 is requesting that storage node 230 perform a recall. Relative record number field 544 of management work element 588-16 contains 4 indicating that the next

- 47 -

0216170

management work element in the storage node queue appears at relative record 4 of queue data set 10.

Relative record 4 contains management work element 566-15. Management work element 566-15 is the fifth element in the storage node queue as indicated by the 15 in the last two digits of the reference numeral. Management work element 566-15 contains host ID field 542 which indicates that management work element 566-15 was placed on the storage node queue by worker node 1. MWEFUNC field 548 of management work element 566-15 contains 5 indicating that worker node 1 placed a request that storage node 230 perform a recover operation. Relative record number field 544 of management work element 566-15 contains a 1 indicating that the next management work element in the storage node queue is found at relative record 1.

Relative record 1 contains management work element 560-14 which was placed on the storage node queue by worker node 1 as seen by host ID field 542, which contains the WN1 identification, and requests a recall function of the storage node as seen in MWEFUNC field 548. Relative record number field 544 of management work element 560-14 contains 3 indicating that management work element 564-13 in relative record 3 is the next management work element in the storage node queue.

Host ID field 542 of management work element 564-13 indicates that management work element 564-13 was placed on the storage node queue by worker node 2. MWEFUNC field 548 of management work element 564-13 contains a 7 indicating that worker node 2 placed a request that the storage node perform a backup operation. Relative record number field 544 points to relative record 7 which contains management work element 572-12.

Management work element 572-12 was placed on the storage node queue by worker node 1 as indicated by host ID field 542 of management work element 572-12. Management work element 572-12 requests a recover operation from the storage node as indicated by MWEFUNC field 548 which contains 5. Relative record number field 544 of management work element 572-12 contains a pointer in relative record number field 544 which points to relative record number 6.

Relative record 6 contains management work element 510-11. The reference numeral of management work element 570-11 indicates that management work element 570-11 is the first management work element placed on the storage node queue. This may be seen by the 1 in the last digit of the reference numeral. Relative record number field 544 of management work element 570-11 contains 0 indicating the end of the storage node queue. Thus the storage node work to do queue contains six management work elements. The six relative records which contain the six management work elements in the storage node queue, in order from the most recently received management work element to the first received, are relative records 15, 4, 1, 3, 7, and 6.

Queue data set 10 of Fig. 2C also includes a work completed queue for worker node 1. The last management work element added to worker node 1's queue resides at relative record 5 as indicated by worker node 1's work completed pointer field 516 of control record 500. Worker node 1 work completed pointer field 516 always points to the end of worker node 1's queue.

Relative record 5 contains management work element 568-26. Management work element 568-26 is the sixth element in queue 2 which is the queue of worker node 1. Relative record number field 544 of management work element 568-26 contains a reverse pointer to relative record 12 indicating that relative record 12 contains the next management work element in worker node 1's LIFO queue.

Management work element 582-25, which resides at relative record 12, contains 11 in relative record number field 544 thus pointing to management work element 580-24 which resides at relative record

11. Relative record number field 544 of management work element 580-24 contains 10 thereby pointing to relative record 10 which contains management work element 578-23, the next management work element in worker node 1's queue.

The relative record number field 544 of management work element 578-23 which resides in relative record 10 contains a pointer pointing to relative record 2 as the next management work element in worker node 1's queue. Relative record 2 contains management work element 562-22. Management work element 562-22 contains 14 in relative record number field 544 indicating that management work element 586-21 which resides at relative record 14 is the next management work element in the queue. Relative record number field 544 of management work element 586-21 contains 0 indicating that management work element 586-21 is the end of worker node 1's queue.

Worker node 2 also has a queue within queue data set 10. Worker node 2's queue begins at relative record 17 as seen in worker node 2's work completed pointer field 520 of control record 500. Worker node 2's work completed pointer field 520 always points to the end of worker node 2's queue. Relative record number field 544 of management work element 592-32 contains 8 indicating that the next management work element in its queue is management work element 574-31 which resides at relative record 8. Relative record number field 544 of management work element 574-31 contains 0 indicating that it is the first element placed by the storge node into worker node 2's work completed queue and that it is the last management work element of worker node 2's queue. Worker node 2's queue therefore contains only management work elements 592-32 and 574-31 which are stored in relative records 17 and 8 respectively.

Thus queue data set 10 includes three distinct queues: a work to do queue for the storage node, a work completed queue for worker node 1, and a work completed queue for worker node 2. These queues may be, as shown, interleaved with respect to a sequential progression through relative records 1-17 of queue data set 10. Since the management work elements which comprise these queues are linked by pointers, management work elements which are dequeued or added to queues may be positioned at any available location within queue data set 10. Thus the queues within queue data set 10 may be built asynchronously. For example, relative records 9, 13, and 16 are not part of any of the the three queues described. They are available to receive a management work element which a worker node may place on the storage node queue.

It will be understood that the identifications worker node 1, worker node 2 and worker node 3 of the foregoing discussion may refer to CPUs 200, 210 and 220 of Fig. 1A. However any CPU within system 15 may be designated as worker node 1, 2, or 3.


## Enqueuing Management Work Elements

To add a management work element to a queue, bit allocation map 522 of control record 500 is scanned. Bit allocation map 522 contains one bit for each record within queue data set 10 including control record 500. A bit in bit allocation map 522 is 1 if the record to which it corresponds contains a management work element and is 0 if the record to which it corresponds is available to receive a management work element. The first bit of bit allocation map 522 corresponds to the first record of control data set 10 which is control record 500. The first record of queue data set 10 is never available to receive a management work element because control record 500 is reserved for control data as previously described. Therefore the first bit of bit allocation map 522 is always 1.

The second bit of bit allocation map 522 corresponds to relative record 1 which contains management work element 560-14 and is therefore active. Therefore the second bit of bit allocation map 522 is 1. The third bit of bit allocation map 522 corresponds to relative record 2. Relative record 2 contains management work element 562-22 and therefore the third bit of bit allocation map 522 is also 1.

The tenth bit of bit allocation map 522 corresponds to relative record 9 which does not contain an active management work element. Therefore the tenth bit of bit allocation map 522 contains a 0 indicating that the corresponding relative record, relative record 9, is available to store a management work element which a worker node presents to be placed on the storage node queue. Additionally, the fourteenth bit of bit allocation map 522, which corresponds to relative record 13, is 0. This indicates that relative record 13 is also available. Similarly, the seventeenth bit of bit allocation map 522 is 0 indicating that relative record 16 is available.

When searching for a relative record in which to place a management work element, a worker node begins at the second lowest order bit of bit allocation map 522 and searches toward the high order bit of bit allocation map 522 until it finds a 0. The relative record corresponding to the first 0 encountered in map 522 is used by the worker node. In the example of Fig. 2C, the first 0 encountered is the

tenth bit of bit allocation map 522 which corresponds to relative record 9. Therefore, to add a management work element to the storage node work to do queue, the worker node stores the management work element in relative record 9. Another worker node searching immediately after the management work element is queued would find its first 0 in bit allocation map 522 at the fourteenth bit and would therefore store its management work element in relative record 13.

To add a management work element to the storage node queue at relative record 9, a worker node stores data into the appropriate fields of relative record 9. This data includes its host ID which is stored in field 542 and the function requested which is stored in MWEFUNC field 548. To determine the data entered into relative record number field 544 of management work element 576-00 the worker node accesses storage node work to do pointer field 512 of control record 500. Work to do pointer field 512 contains a pointer pointing to the last management work element added to the storage node queue. This most recently added management work element is the one which the newly added management work element must point in order to link the chain.

Therefore, work to do pointer field 512 is read and its contents are stored in relative record number field 544 of management work element 576-00.

The worker node which added management work element 576-00 to the storage node queue must then store into storage node work to do pointer field 512 the number of the relative record into which it has inserted its management work element. Therefore, the worker node stores 9 in pointer field 512 of control record 500.

Additionally, the worker node must write a 1 into the tenth bit of bit allocation map 522 in order to indicate that the relative record in which it stored its management work element is now active. After the worker node has enqueued the management work element, the identifying reference numeral changes from 576-00 to 576-17 because management work element 576-17 is the seventh element in queue 1, the storage node queue.

## Initialization Processing

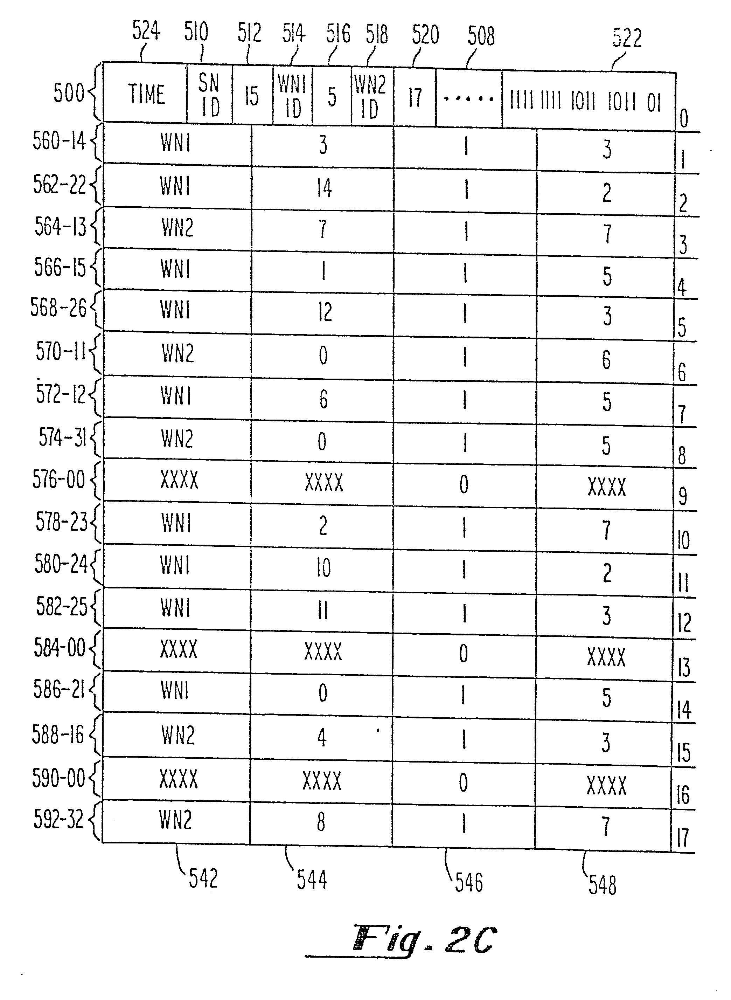

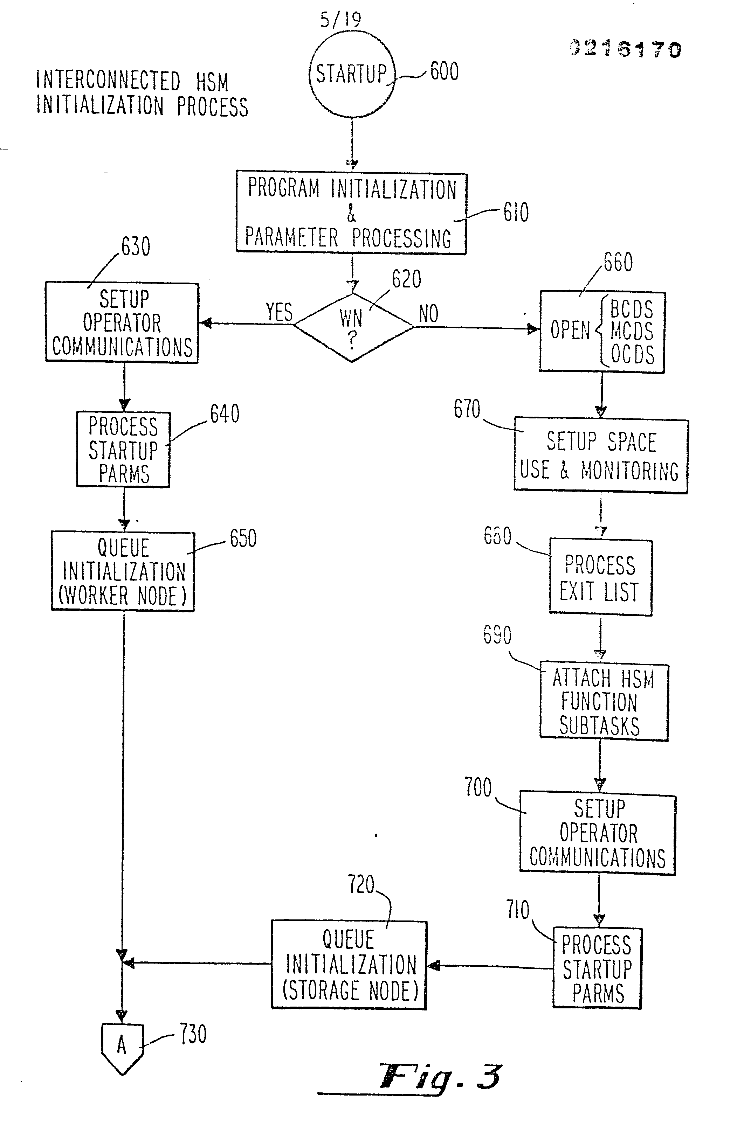

Referring now to Fig. 3, there is shown a flow diagram of the method of the present invention. A host computer executing in an IHSM environment performs the initialization process which begins at startup 600. When invoking IHSM, an operator provides startup parameters. These parameters are processed in program initialization and parameter processing block 610. Program initialization includes the creation of internal control blocks and determination of the host processor ID. This initialization process is run independently for each host processor in the complex. If the startup is a cold start, the storage node must perform the procedures of block 510 before any of the worker nodes. If a worker node is started before the storage node in a cold start, it encounters an invalid condition and terminates.

At decision 620 a determination is made indicating whether the host processor performing the initialization process is a worker node or a storage node. If the host processor is a worker node, the determination of decision 620 is affirmative and block 630 is executed. In block 630, operator communications are set up. Each host processor within the multiprocessor complex has a separate task that handles its own operator communications. Therefore, each host processor must identify its host environment correctly to communicate through IHSM.

At block 640, the particular startup parameters for the worker node being initialized, as supplied by the operator, are processed. For example, one parameter supplied by the operator is the type of startup which is being performed. A startup may be a cold start, a warm start, or a hot start depending on the state of the queues in Queue Data Set (QDS) 10.

If all queues are assumed or known to be invalid, a cold start is entered by the operator. This is a very drastic procedure because all management work elements in QDS 10 are destroyed during a cold start. In a hot start, all queues are assumed or known to be valid. In a warm start, the queues within queue data set 10 are verified by checking the pointers within the queue. Other than this check on the pointers, the currently existing queues are assumed to be valid. New queues may also be added during a warm start.

Another parameter which may be supplied by the operator at block 640 is the duration of the worker node's access timer. The duration of the worker node's access timer determines how long the worker node must wait between accesses to QDS 10. The timer is started when the node releases QDS 10 and the node may not access QDS 10 again until the timer expires. Altering the duration of each node's timer during initialization allows fine tuning of access to QDS 10 within IHSM.

In block 650 the worker node performs its queue initialization. To perform queue initialization, the worker node, among other operations to be described later, opens QDS 10 and places its host processor ID in a free worker node segment. For example, if the worker node being initialized is worker node 1, its host ID is written into worker node 1 ID field 514 of worker node 1 segment 504 within control record 500.

If the host processor is the storage node, as determined in decision 620, block 660 is performed. In block 660, the storage node opens the three control data sets, the Backup Control Data Set (BCDS), the Migration Control Data Set (MCDS), and the Offline Control Data Set (OCDS). These control data sets are normal VSAM Keyed Sequential data sets. The operations of block 660 only open pre-existing control data sets in a conventional manner. If these files are not already in existence and/or are not correctly initialized, the storage node generates an error and terminates.

At block 670, space is set up as previously described for Fig. 1A. At block 680 an exit list is processed. The operations of blocks 670, 680 are performed as in prior HSM as described in the Documents Incorporated by Reference.

At block 690, the HSM function subtasks are attached. These subtasks include the migration control task, recall, recovery, and backup, as well as restore, delete, and retire tasks which are included in the other tasks. These are the tasks which actually perform the functions of moving files from one volume to another as required by user requests or system protocol.

At block 700, the storage node sets up operator communications in a manner similar to that in which the worker node set up operator communications as previously described for block 630. Similarly, in block 710 the storage node processes its startup parameters. The range of parameters which may be processed by a storage node at block 710 is much broader than the range of parameters which may be processed by a worker node at block 640 because the parameters which a worker node may process are necessarily a subset of the storage node parameters.

An example of a startup parameter which a storage node may process in block 710 is the ADVOL command which defines the volumes which are managed by IHSM. Additionally, any parameters related to SETSYS, the routines dealing with automatic processing within IHSM, are processed by the storage node at block 710. An example of a SETSYS parameter is the number of days a data set may reside on a higher level DASD (without being accessed) before it is migrated to a secondary storage device.

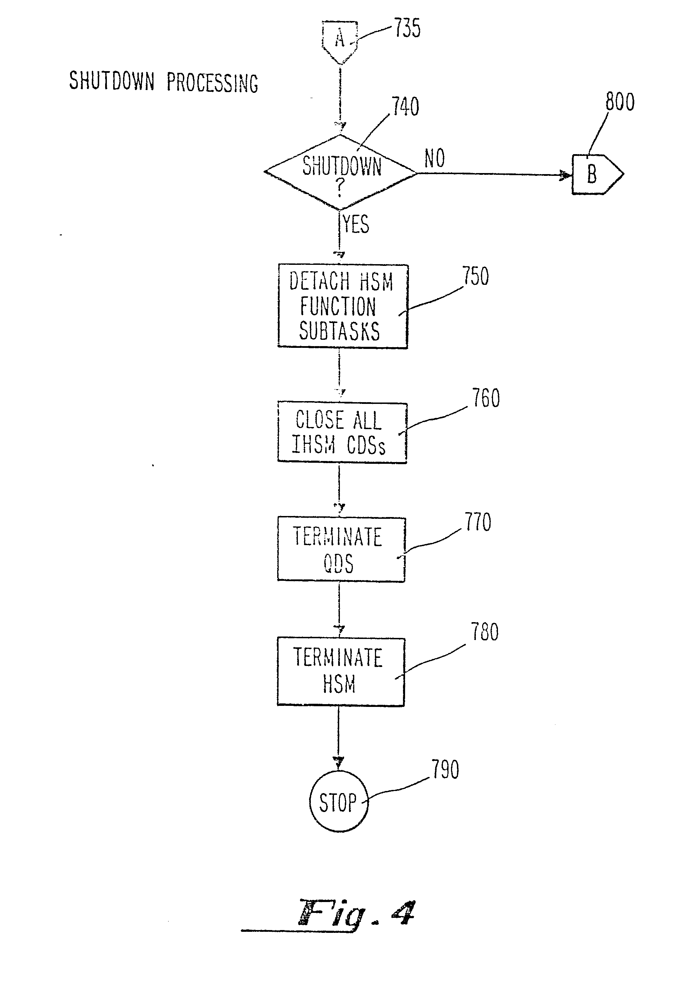

Following the processing of startup parameters, queue initialization is performed at block 720. Queue initialization for a storage node, as described below in more detail, includes opening QDS 10 and placing the storage node's host ID in storage node ID field 510 of storage node segment 502 within control record 500. From block 720 execution proceeds through offpage connector 730 to onpage connector 735 of Fig. 4.

At decision 740, following onpage connector 735, a determination is made indicating whether to shut down IHSM. This determination is made by looking at a termination flag which may be set for a variety of different reasons at a plurality of points within IHSM. The most common way in which the termination flag is set is operator entry of a stop command. The operator stop command is trapped by the operator task in each different node which sets its own internal control block flag if it is in a shutdown mode. Additionally, there are various error conditions which may result in the termination flag being set as will be described below in more detail. However, at decision 720 the origin of the termination flag is irrelevant. If the flag is set, block 750 is performed.

In block 750, the IHSM function subtasks which were attached in block 690 are detached and an orderly shutdown procedure is performed. Beginning in block 760 all IHSM control data sets are closed including the BCDS, the MCDS, and the OCDS. QDS 10 is

0216170

terminated in block 770, IHSM is terminated in block 780 and the task is taken down entirely at Stop 790.

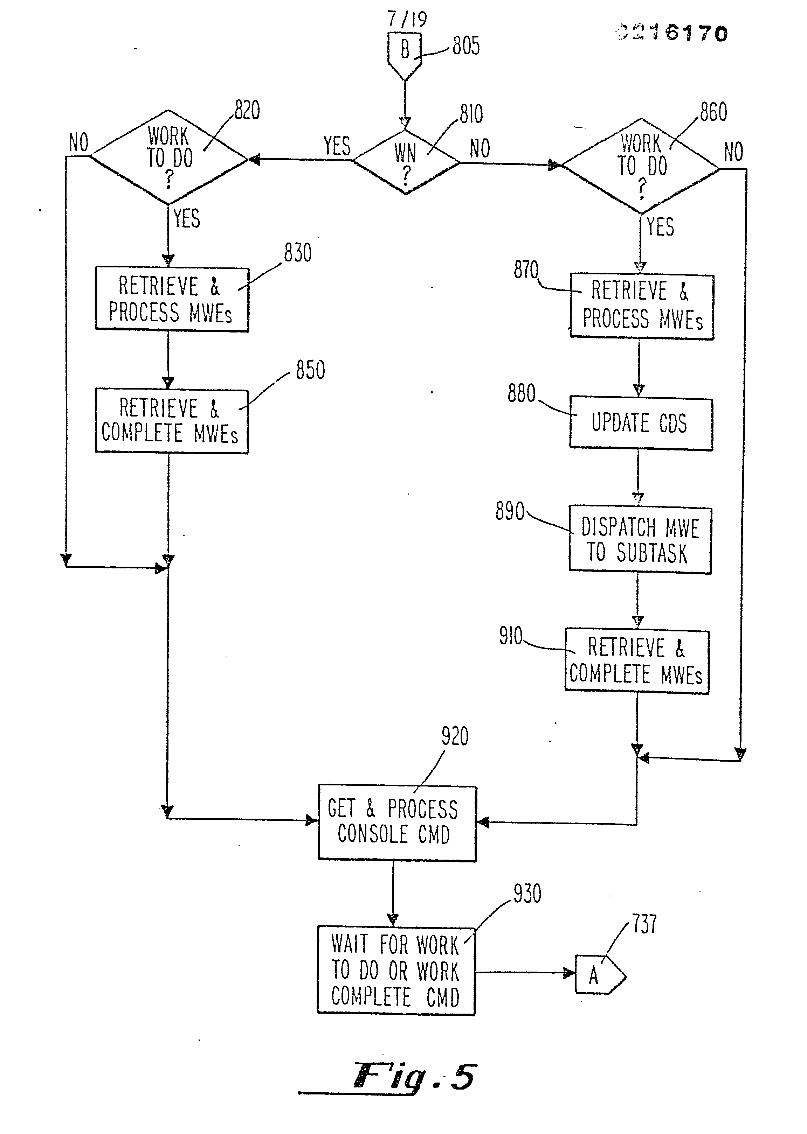

If a determination is made not to shutdown at decision 740, execution proceeds off-page at offpage connector 800 to onpage connector 805 of Fig. 5. The path from onpage connector 735 and the NO path of decision 740 to offpage connector 800 is taken each time a host processor executes the HSM main loop. This path is part of the normal processing loop.

Referring now to Fig. 5, when execution enters at onpage connector 805, a determination is again made at decision 810 indicating whether the host processor is worker node or storage node. If the host processor is a worker node, execution takes the YES path from decision 810 and makes a determination, at decision 820, whether there is work for the worker node to perform.

The determination of whether there is work to do is made by examining a flag which is set when a user task, such as a batch job, submits a request to IHSM. Under these circumstances, a management work element is created and queued in common storage and a cross-memory post to IHSM is made. This post to IHSM is read as a flag in decision 820. The flag is also set by the worker node's access timer to assure that the worker node checks QDS 10 periodically. If there is no work for the worker node to perform, execution branches to block 920. If there is work to do as determined by examining this flag in decision 820, the worker node retrieves and processes management work elements at block 830.

As will be more fully described below, processing of management work elements in block 830 includes enqueuing the management work element to be processed in the storage node's queue within QDS 10. Additionally, while the worker node has QDS 10 open to enqueue management work elements, it dequeues any of its management work elements which are now complete.

If it is determined in decision 810 that the host processor is not a worker node, it must be a storage node and a determination is made in decision 860 of whether there is any work for the storage node to perform. If there is no work for the storage node to perform, the storage node processes any console commands which may have been entered during the current processing loop at block 920. If there is work for the storage node to perform, the storage node retrieves and processes management work elements at block 870.

The flag which is checked at decision 860 to determine whether there is work for the storage node to do is set by the storage node's access timer to cause the storage node to periodically check its queue in QDS 10. The processing of management work elements within block 870 includes retrieving management work elements from the storage node work to do queue and enqueuing them in the storage node's general queue.

After the management work elements from the storage node work to do queue are enqueued in the storage node's general queue, the management work elements are dispatched to the appropriate subtasks in block 890. A management work element is dispatched to the appropriate subtask based upon the function requested within the management work element. Dispatching the management work element to the subtask entails posting it to that subtask's work to do queue.

When the subtask has completed the function requested by the management work element, it posts that management work element as completed. When management work elements are posted as completed, the storage node retrieves them from the subtask and places them in the storage node's general queue in block 910. Also in block 910 the storage node completes its work on the management work elements by dequeuing them from the storage node general queue and placing them in the originating worker node's queue in QDS 10.

Following the retrieval and completion of management work elements in block 910, the console is polled in block 920. This is how IHSM receives and processes console commands from the operator. This step is executed each pass through the processing loop to determine whether the console operator has entered any commands since the last pass through the loop.

IHSM waits at block 930 for work to do, a work complete command, the expiration of its timer or the generation of work to do within the storage node. In the meantime, while IHSM waits at block 930, functional tasks may continue processing. Offpage connector 737, which follows block 930, connects with previously described onpage connector 735 of Fig. 4. This connection completes the main processing loop.

## Worker Node-Initialization

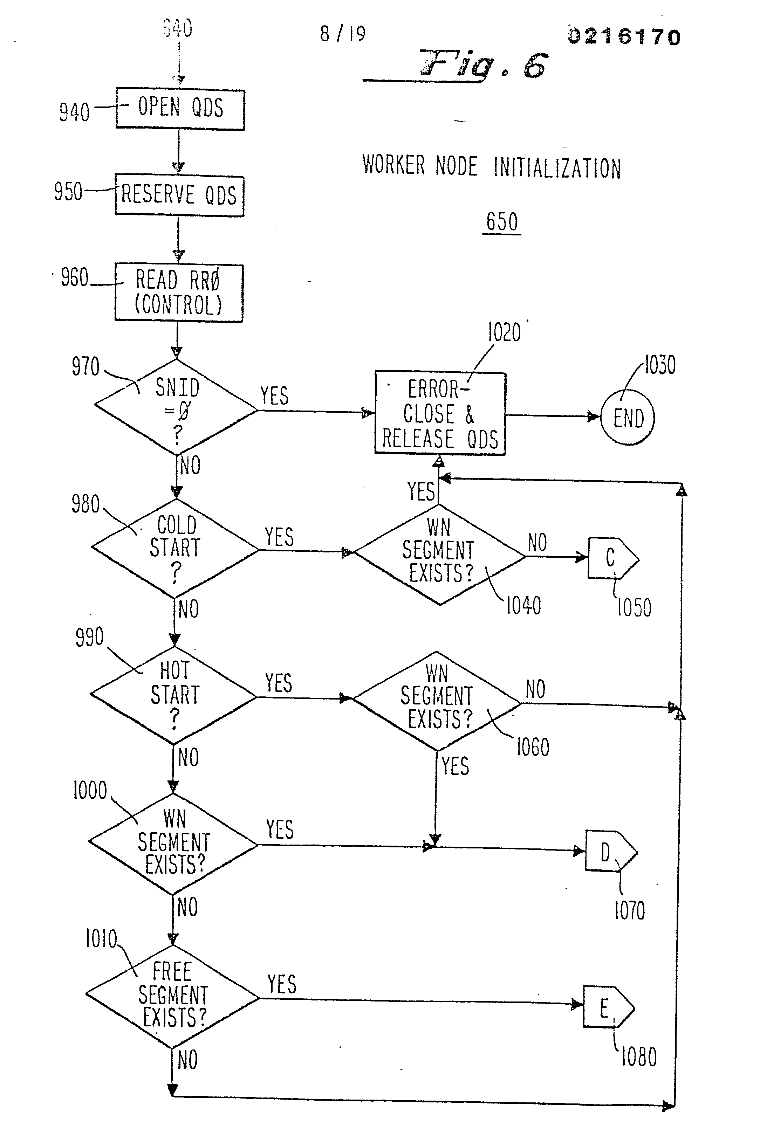

Referring now to Fig. 6 there is shown a flow chart of the worker node initialization. This is an expanded block diagram detailing the operations of worker node queue initialization block 650 of Fig. 3. Execution proceeds from block 640 to block 940 in which QDS 10 is opened. The opening of QDS 10 in block 940 is a conventional opening of a VSAM relative record data set. At block 950, QDS 10 is reserved by the worker node which has opened it. The QDS reserve

is a mechanism to prevent cross processor interaction by preventing input or output to the hardware on which the QDS is stored while the worker node is being initialized. Thus all other processors are blocked out of the DASD while the worker node completes the following initialization process.

When all other processors have been locked out by the worker node being initialized, the worker node reads relative record 0 of QDS 10 in block 960. Relative record 0 of QDS 10 is control record 500 as shown in Fig. 2B. One of the fields within control record 500 is storage node ID field 510. At decision 970 the worker node being initialized determines whether storage node ID field 510 contains a 0. If storage node ID field 510 contains a 0, there is no active storage node and an error condition exists in block 1020. In block 1020 the QDS 10 is closed and released and execution is terminated at end 1030.

If the storage node is not 0, a determination is made in decision 980 whether the startup in process is a cold start. The determination made in decision 980 is based upon a flag that is set based upon a parameter from the operator and processed in block 640. If the system is undergoing a cold start, the worker node determines in decision 1040 whether its worker node segment exists. Worker node segments are segments of control record 500 within QDS 10 which contain an ID field for a worker node and a pointer to the last management work element in that worker node's queue.

If it is determined that the worker node segment exists for the worker node undergoing initialization in decision 1040, there is an error because there should not be any pre-existing worker node segments in a cold start. For example, if a worker node finds that its ID is already in a worker node segment at this point, it may indicate a duplicate host processor ID. Therefore, an error condition exists as shown in block 1020 and QDS 10 is closed and released and execution is terminated at end 1030 as previously described.

If the worker node segment did not exist, as determined by decision 1040, the host ID of the worker node performing the initialization process is available and execution proceeds to offpage connector 1050. If the startup was not a cold start, as determined by decision 980, a determination is made at decision 990 whether the startup is a hot start.

If the startup is a hot start as determined in decision 990, a determination is made in decision 1060 whether a worker node segment exists which corresponds to the worker node undergoing initialization. If the worker node segment does not exist as determined at decision 1060, an error condition exists because during a hot start the worker node segment should already exist. Therefore, execution proceeds to block 1020 as previously described. Otherwise, execution proceeds to offpage connector 1070.

If the startup is neither a cold start as determined at decision 980, nor a hot start as determined at decision 990, then the startup is a warm start. During a warm start, a determination must be made whether a worker node segment corresponding to the worker node undergoing initialization exists. This determination is made at decision 1000. If the worker node segment does exist, then execution may proceed to offpage connector 1070.

If the worker node segment does not exist, a determination must be made at decision 1010 whether there exists a free worker node segment into which the worker node may write its host ID. If a free segment does not exist, the worker node does not have a segment in which to place its ID and an error condition exists. Therefore, execution proceeds to block 1020 as previously described. If a free segment does exist, execution proceeds to offpage connector 1080.

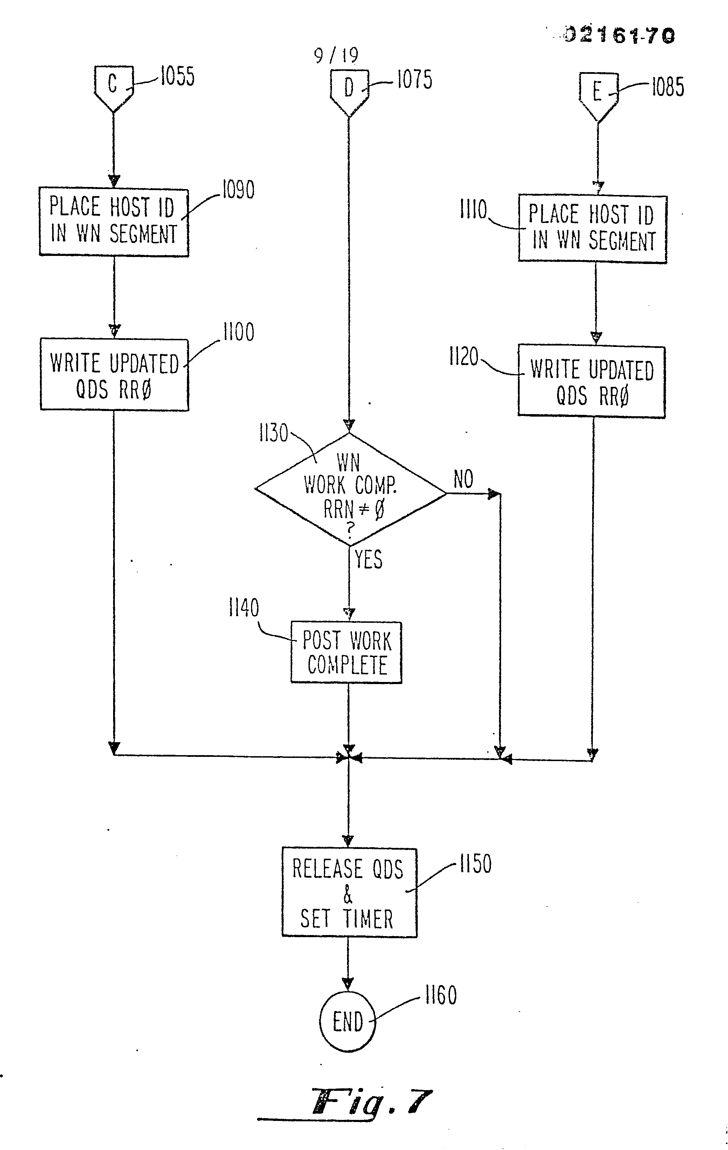

Referring now to Fig. 7, there is shown a continuation of the flow chart of Fig. 6. Offpage connector 1050 of Fig. 6 connects with onpage connector 1055 of Fig. 7. This path is taken by the worker node when the startup is a cold start and no worker node segment already exists for the worker node being initialized. Therefore, in block 1090 the worker node places its host processor ID in an available worker node segment. For example, if the worker node being initialized is worker node 1, its host processor ID is placed in worker node ID field 518 of control record 500. If the initializing worker node is worker node 2, then its host processor ID is field 514 of control record 500.

Updated control record 500 containing the new worker node host ID in the available worker node segment is written to QDS 10 at block 1100. At block 1150, QDS 10 is released by the worker node and the access timer of the worker node which opened QDS 10 in block 940 is started. This makes QDS 10 available to other nodes in the complex and prevents the releasing worker node from gaining access to QDS 10 again until the expiration of its access timer.

Offpage connector 1070 of Fig. 6 connects to onpage connector 1075 of Fig. 7. This path is taken when the startup is a warm or hot start and a worker node segment already exists for the worker node performing the initialization process. This condition may result when a worker node goes down and comes back up while the storage node continues running. Under these circumstances it is possible that the storage node may have completed work for the worker node being initialized while it was inoperative.

To determine whether any management work elements were completed for it while it was down, the worker node being initialized checks the pointer in its worker node segment to determine whether it is 0 in decision 1130. If the pointer is not 0, then there is work in its queue which it may remove. Additionally, the worker node being initialized may post work to do in the storage node queue as shown in block 1140.

In a warm start, when a free segment exists, as determined in decision 1010, execution proceeds from offpage connector 1080 to onpage connector 1085 and to block 1110. In block 1110, the worker node being initialized writes its host ID in the available worker node segment as previously described. Updated control record 500 is written to QDS 10 in block 1120 and the worker node releases QDS 10 and sets its access timer in block 1150 and terminates at end 1160.

Storage Node-Initialization

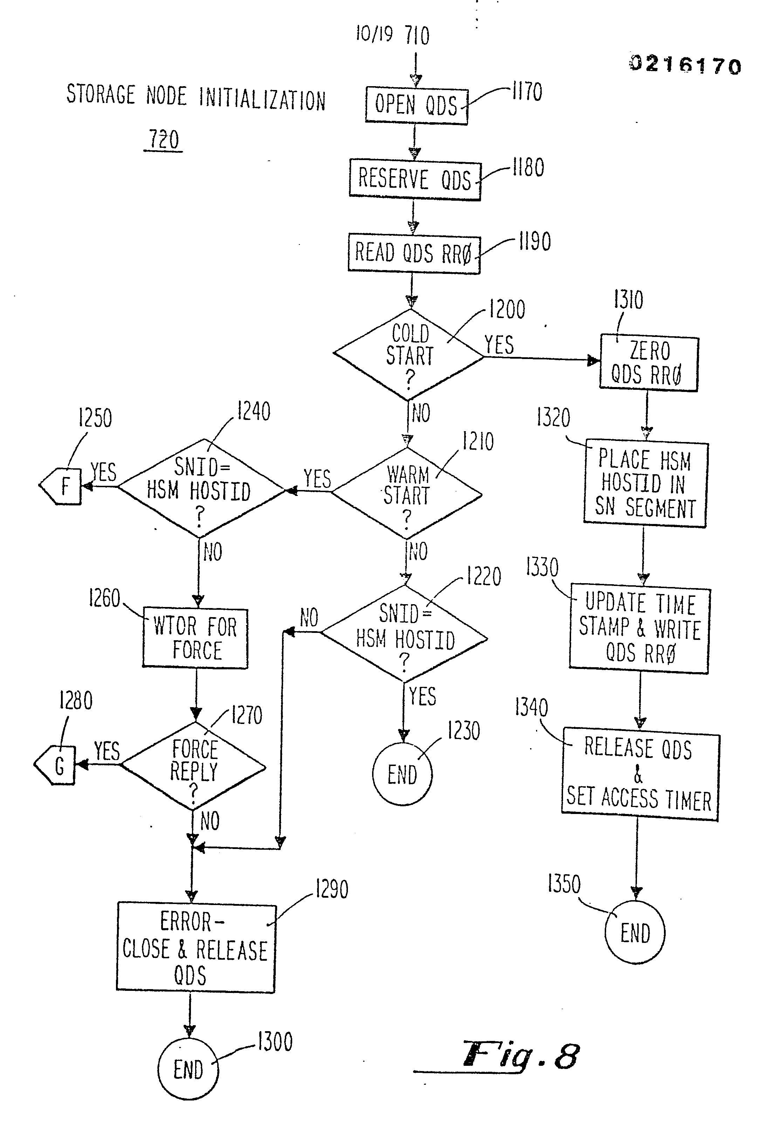

Referring now to Fig. 8, there is shown a flow chart of the storage node initialization process. The storage node initialization is a more detailed diagram of block 720 of Fig. 3. Execution proceeds from block 710 to block 1170 in which QDS 10 is opened, as previously described for block 940 of the worker node initialization. Also as previously described, QDS 10 is reserved in block 1180 to prevent other processors from interacting with QDS 10 during the storage node initialization. Control record 500 of QDS 10 is read from QDS 10 in block 1190.

A determination is made at decision 1200 whether the startup is a cold start. If a determination is made that the startup is a cold start, control record 500 of QDS 10 is filled with zeroes in block 1310. Every location in control record 500 is made 0 to completely erase any information which may be in control record 500 from previous use.

In block 1320, the ID of the host processor being initialized as the storage node is written into storage node ID field 510 of storage segment 502 within control record 500. At block 1330, the time stamp of time activity field 524 is updated and control record 500 is written back into QDS 10. QDS 10 is released and the access timer of the storage node is set in block 1340. Storage node initialization on a cold start then ends at end 1350.

If the startup of the storage node is not a cold start as determined in decision 1200, then a determination is made in decision 1210 whether the startup is a warm start. If the startup is a warm start, a determination is made in decision 1240 whether the storage node ID as found in storage node ID field 510 of control record 500 is the same as the host ID. If the answer to the determination of decision 1240 is no, the host processor currently being initialized as the storage node is a different host processor from the one which served as the storage node before the warm start. (This is rare since usually the one host processor serves as the storage node in a given complex.) Therefore, a Write To Operator with Reply (WTOR) is performed in block 1260. Under the Write To Operator with Reply procedure, the task goes into a wait state until the operator responds. If the operator does not force the host processor to become the storage node as determined in decision 1270, an error routine is performed in block 1290 including closing and releasing QDS 10 and termination of the initialization process at END 1300. The usual cause of this error is the incorrect designation of a host processor as the storage node.

If the operator indicates that the host processor should be the storage node, execution proceeds to offpage connector 1280. If the storage node ID as found in storage node ID field 510 of control record 500 is the same as the HSM host processor ID as determined in decision 1240, execution proceeds through offpage connector 1250.

If the startup is neither a cold start as determined by decision 1200 nor a warm start as determined by decision 1210, it must be a hot start. During a hot start the same host processor must retain the storage node status. Therefore, a determination is made in decision 1220 whether the storage node ID in control record 500 is the same as the ID of the HSM host processor. If this determination is negative in a hot start, an error condition exists and execution proceeds to block 1290 in which QDS 10 is closed and released and initialization is ended. If the storage node ID of field 510 is the same as the host processor ID, initialization of the storage node is successfully completed and terminates at end 1230.

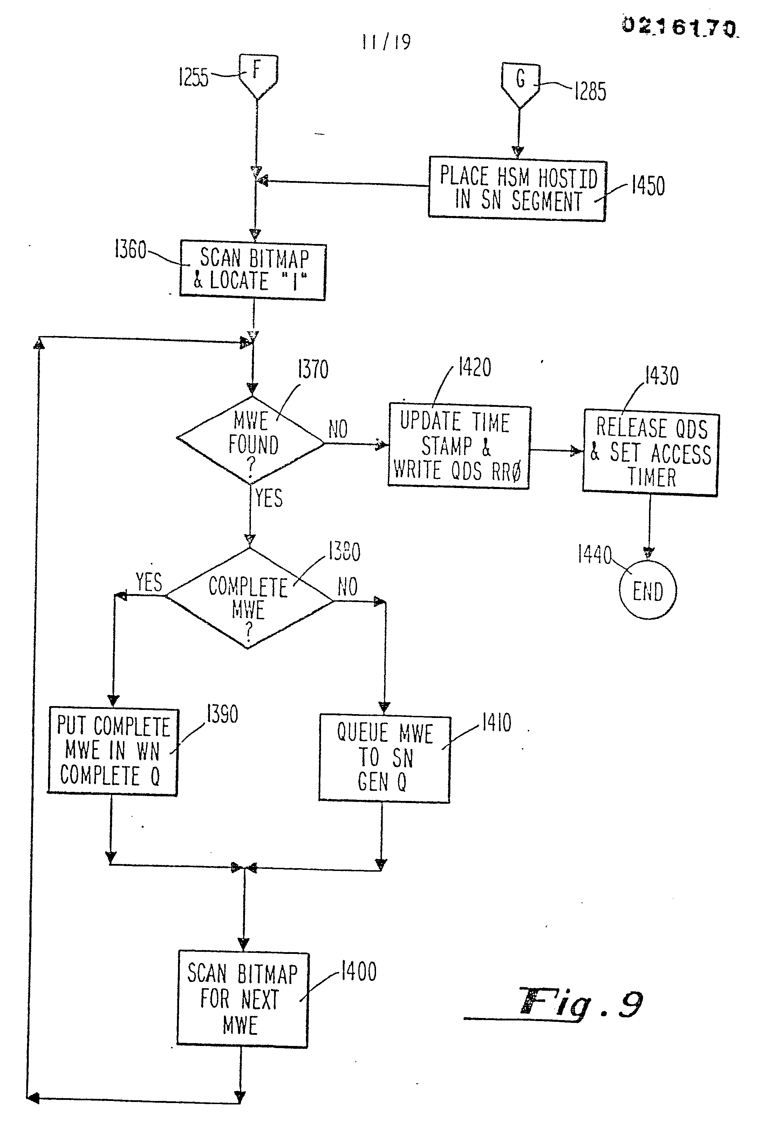

Referring now to Fig. 9, a continuation of the flow chart of Fig. 8 is shown. On a warm start in which the storage node ID is the same as the HSM host processor ID as determined in decision 1240, execution proceeds from offpage connector 1250 of Fig. 8 to onpage connector 1255 and into block 1360. If the host processor is to become the storage node, as determined in decision 1470, execution proceeds from offpage connector 1280 of Fig. 8 through onpage connector 1285 and the host ID is placed in the storage node segment. In block 1360, allocation map

0216170

522 of control record 500 is scanned from left to right to locate the first 1 following the bit corresponding to control record 500 itself. When found, this first 1 indicates the location of the first active management work element in QDS 10. The position of the 1 bit in allocation map 522 indicates the relative record number within QDS 10 which contains the first active management work element.

In decision 1370, a determination is made whether a management work element was found. Thus if the entire allocation map 522 was scanned without finding a 1, the answer to the determination of decision 1370 is no and the entire QDS 10 is empty. When QDS 10 is empty on a warm start, the time stamp of activity time field 524 is updated in block 1420 and control record 500 is written back into relative record 0 of QDS 10. QDS 10 is released in block 1430 and the access timer of the storage node is started. Thus END 1440 indicates the successful completion of storage node initialization on a warm start.

If a management work element is found, as determined by decision 1370, a determination is made at decision 1380 whether the management work element found is a completed management work element. If the management work element is complete, it is put into the correct worker node work completed queue in block 1390. If the management work element is not complete, as determined by decision 1380, the management work element is placed in the storage node's general queue in block 1410.

Whether the management work element is complete and placed in a worker node work completed queue or not complete and placed in the storage node's general queue, in block 1400, allocation map 522 of control record 500 is scanned to find the next management work element. Execution loops back to decision 1370 in which a determination is made whether another management work element was found. If another management work element was not found, execution proceeds to end 1440 as previously described. If a management work element was found, a determination is again made in decision 1380 whether to place it in a worker node queue or the storage node's general queue and allocation map 522 is again scanned in block 1400.

This loop continues until all management work elements in QDS 10 are located. This is done during the storage node initialization on a warm startup because some management work elements within QDS 10 may be complete and others may not be complete and a cleanup operation to put all completed management work elements in their respective worker node queues and to queue up all management work elements not complete in the storage node queue for later processing is required.

## Worker Node-Retrieve Management Work Elements

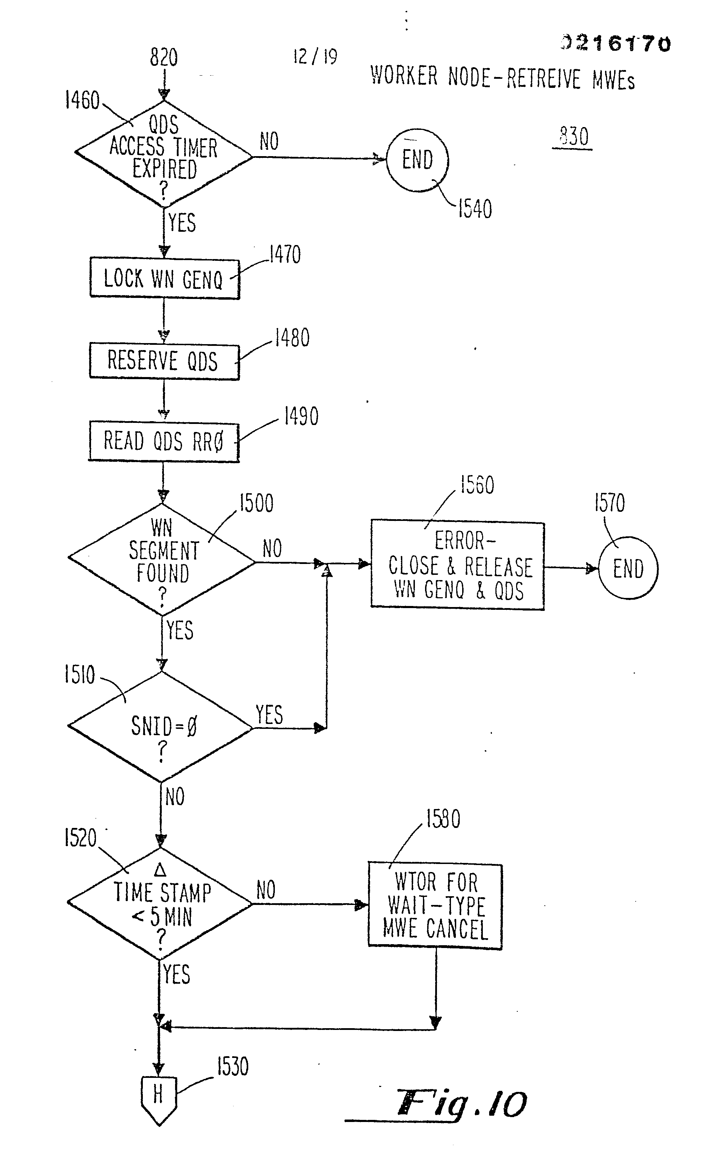

Referring now to Fig. 10, an expanded flow chart of the operations within block 830 of Fig. 5 is shown. In block 830 worker nodes retrieve and process management work elements. Execution proceeds from decision 820 to decision 1460 in which a determination is made whether the QDS access timer of the worker node has expired. If the worker node's access timer has not expired, the worker node is not permitted access to the QDS 10 yet and exits at END 1540.

If the worker node's access timer has expired, the worker node locks its own general queue in block 1460. This prevents other tasks running within the worker node from accessing the worker node's queue while the worker node is retrieving management work elements. (Permitting access to the general queue while the worker node is retrieving management work elements may disrupt the enqueuing process.) In block 1480, the worker node retrieving management work elements reserves QDS 10 by locking other host processors out of QDS 10. At block 1490 the worker node reads control record 500 from QDS 10.

The worker node then searches for its worker node segment within control record 500 of QDS 10. A

D216170

determination is made in decision 1500 whether the worker node successfully found its worker node segment. If the worker node does not find its worker node segment, an error condition exists, and in block 1560 the worker node general queue and QDS 10 are closed and released and the process is terminated at END 1570.

As described above, every time a worker node accesses QDS 10, it performs this error check to detect the destruction of information in QDS 10 due, for example, to a media failure. If the worker node segment which is checked by the worker node is found to be correct, there is a high level of confidence that the remaining data within QDS 10 is accurate since most failures result in an entire record being destroyed rather than certain fields retaining their integrity while other fields are destroyed.

If the worker node segment is found in decision 1500, a determination is made at decision 1510 whether storage node ID field 510 of control record 500 contains 0. A 0 value in field 510 indicates that the storage node is inactive and generates an error condition in which the QDS 10 and the worker node general queue are closed and released in block 1560 as previously described.

If storage node ID field 510 is not 0, the worker node checks the time stamp in time activity field 524 to see if less than 5 minutes (for example) has elapsed in decision 1520. Since the storage node updates the activity time stamp of field 524 each time it accesses QDS 10, a time stamp more than 5 minutes old is used to indicate that the storage node has not accessed the QDS for an excessive period of time and that there may be a system failure such as the storage node going down.

If an old time stamp is found (indicating a possibly inoperative storage node), a Write To Operator and wait for Reply (WTOR) is performed in block 1580. Additionally, any management work elements which are being processed at the time that decision 1520 determines that the time stamp was more than 5 minutes if the operator responds to the WTOR with a cancel command. If the operator response is to continue, the management work elements are not cancelled. If the time stamp is not more than 5 minutes old, execution proceeds to offpage connector 1530.

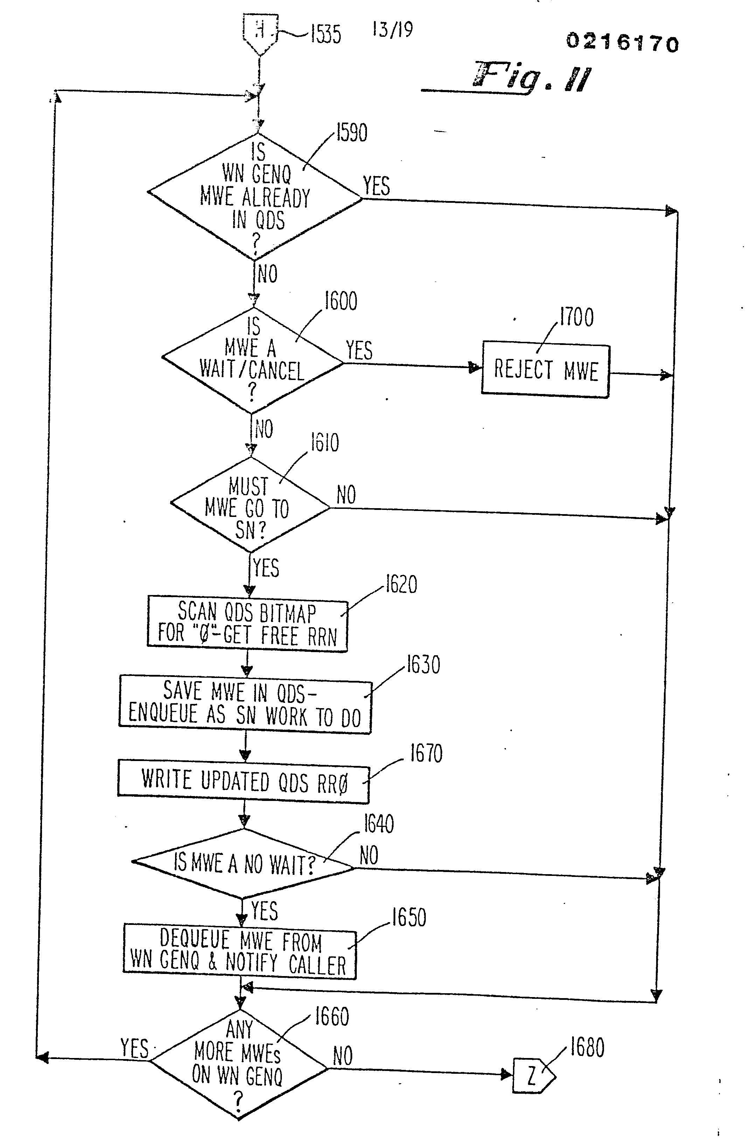

Referring now to Fig. 11, onpage connector 1535 connects with offpage connector 1530 of Fig. 10. In decision 1590, a determination is made whether a management work element received from the worker node's general queue is already in the storage node queue within QDS 10. The worker node general queue is a general repository for the dispatching of work to do and also for the receiving of work complete. Therefore a variety of management work elements within the worker node general queue can be in a variety of states making it necessary to determine whether a management work element found in the worker node general queue should be placed into the storage node queue or has already been placed there and processed by the storage node.

For example, management work elements within the worker node general queue may be waiting to be posted to QDS 10, posted to QDS 10 but not completed, posted and completed but not retrieved and posted, and completed and retrieved but not deleted. If the management work element is already in QDS 10, execution branches to decision 1660 where a determination is made of whether there are any more management work elements in the worker node general queue.

If the management work element in the worker node general queue is not already in QDS 10, as determined by decision 1590, a determination is made at decision 1600 whether the management work element is a cancellable and wait-type work element. If the element is cancellable, the management work element is rejected at block 1700 and execution proceeds to decision 1660 to determine whether there are any more management work elements. The rejection in block 1700 strips the management work element off the worker node general queue, and the management work element stripped off the worker node general queue is returned to the requestor.

If the management work element is not a wait/cancel, as determined by decision 1600, a determination is made at decision 1610 of whether the management work element in the worker node general queue should be enqueued in the storage node work to do queue within QDS 10. If the management work element under consideration represents a locally processed worker node request, the answer to the determination of decision 1610 is no and execution proceeds to decision 1660 as previously described.

If the management work element under consideration should be added to the storage node work to do queue, as determined by decision 1610, allocation map 522 within QDS 10 is scanned in block 1620 to find the first available relative record as indicated by a 0 in that relative bit position within allocation map 522. When an available record is found in the scan of block 1620, the management work element is saved into the available record in block 1630.

The management work element is enqueued in the storage node's work to do queue within QDS 10 by writing the relative record number found in storage node pointer field 512 into relative record number field 544 of the management work element enqueued and by writing the relative record number into which the management work element is inserted into storage node pointer field 512 of control record 500. When the management work element is enqueued, as described in block 1630, execution proceeds to block 1670 in which updated control record 500 is written back to QDS 10. This is necessary since the worker node updates pointer field 512 of control Precord 500 when adding management work elements to the storage node queue and this information must be written to QDS 10 as it is changed to preserve the integrity of QDS 10 in case execution is interrupted before processing of the worker node general queue is completed.

At decision 1640 a determination is made whether the management work element added to the storage node work to do queue is a no-wait management work element. If the management work element is a wait-type management work element, execution proceeds to decision 1660 for determination of whether there are any more management work elements in the worker node general queue as previously described. If the management work element added to the storage node queue is a no-wait management work element, as determined by decision 1640, the management work element which was added to the storage node work to do queue is dequeued from the worker node general queue in block 1650. It is not necessary for the storage node to put a response in the worker node queue if the management work element is a no-wait work element because the worker node is not waiting for it.

After dequeuing the management work element from the worker node general queue at block 1650, execution proceeds to decision 1660 in which the determination is made of whether there are any more management work elements in the worker node general queue. If there are more management work elements in the worker node general queue, the loop is repeated beginning with decision 1590 in which a determination is made of whether the next management work element within the worker node general queue is already in QDS 10.

This loop is repeated until all management work elements in the worker node general queue which are to be placed in the storage node work to do queue are processed. When all such management work elements are processed, execution proceeds from decision 1660 to offpage connector 1680. At this point, the worker node is finished placing its management work elements into the storage node queue and proceeds, by way of offpage connector 1680, to retrieve its completed management work elements back from the storage node. These completed management work elements are placed in the work completed queue of each worker node by the storage node as they are completed.


## Worker Node-Complete Management Work Elements

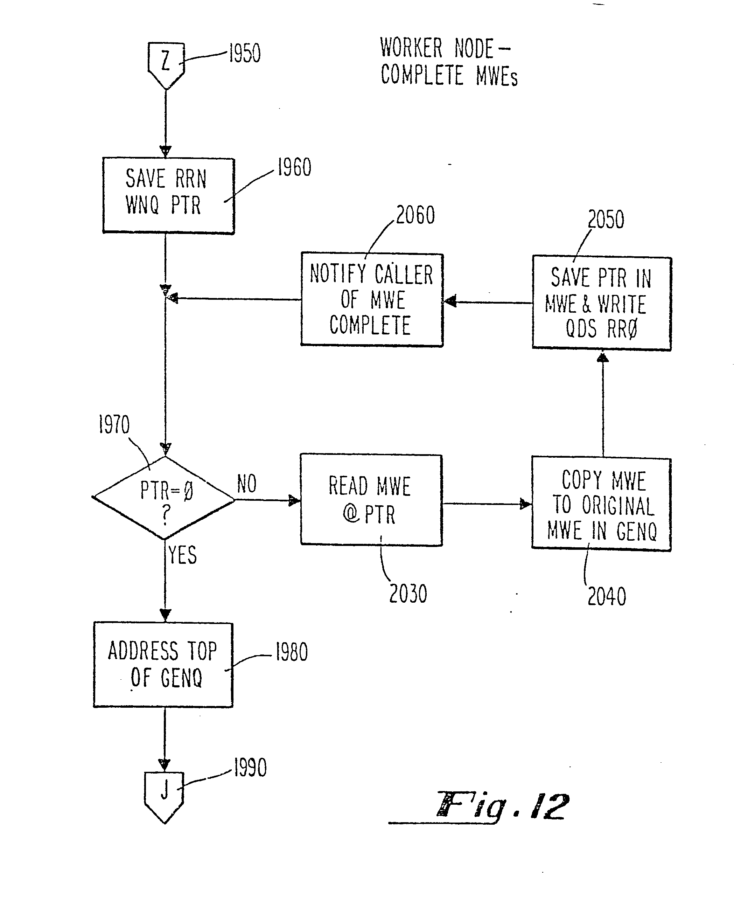

Referring now to Fig. 12, there is shown a more detailed diagram of the functions of block 850 in which management work elements are retrieved. · Execution proceeds from offpage connector 1680 of Fig. 11 to onpage connector 1950 when the worker node is done placing its management work elements in the storage node work to do queue and is ready to retrieve completed management work elements from its work completed queue. In block 1960, the worker node's work completed pointer is saved. For example, if the worker node executing this process is worker node 1, then pointer field 516 of control record 500 of QDS 10 is saved. If worker node 2 is performing this process, pointer field 520 is saved.

In decision 1970, a determination is made whether the saved pointer is 0. If the pointer is not 0, the worker node's work completed queue is not empty, meaning that the storage node has completed some management work elements for the worker node. These completed management work elements must be retrieved by the worker node. To retrieve the management work elements, in block 2030 the worker node reads the management work element pointed-to by the pointer from the appropriate pointer field of control record 500 which was saved in block 1960. This is the completed management work element most recently placed on the worker node's work completed queue. This management work element is copied to the general queue of the worker node which is retrieving it in block 2040.

Relative record number field 544 of the management work element copied to the worker node general queue in block 2040 points to the next management work element in the worker node's work completed queue. This pointer is saved in block 2050 in order that the worker node may locate the next management work element to be retrieved from QDS 10.

Control record 500, which is in the worker node's buffer, is updated by writing the relative record number of the next management work element in the worker node's queue into the appropriate pointer field, for example into field 516 for worker node 1. Control record 500 is then written back into QDS 10. QDS 10 is updated in this manner in case of an error which may suddenly terminate the HSM operation while the worker node is retrieving its work completed queue. In block 2060 the caller of the management work element is notified that the requested function has been completed.

0216170

Execution then returns to decision 1970 in which a determination is made of whether the pointer read from relative record number field 544 of the management work element retrieved from QDS 10 in block 2030 is 0. If the pointer is not 0, the worker node's work completed queue is not empty and the loop including blocks 2030, 2040, 2050, and 2060 is repeated. When the queue is empty, a pointer equal to 0 is encountered in relative record number field 544 of the last management work element read from QDS 10 and the top of the worker node general queue is addressed in block 1980. Execution then proceeds through offpage connector 1990.

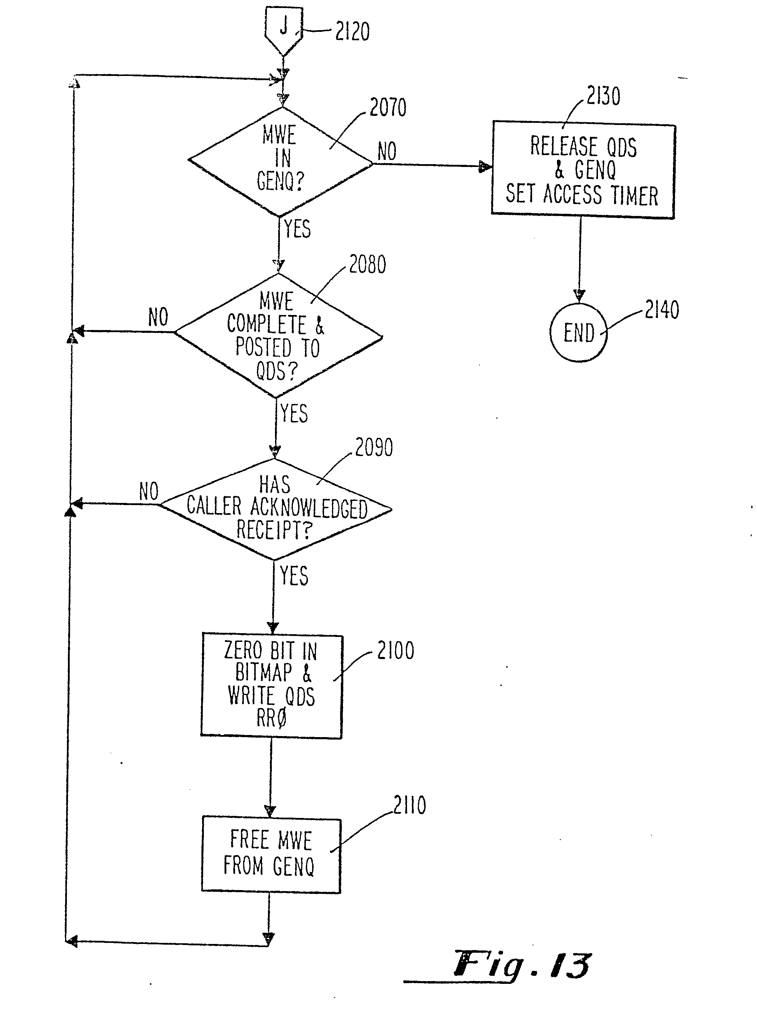

Referring now to Fig. 13, execution enters from offpage connector 1990 to onpage connector 2120. At decision 2070 a determination is made whether there are any management work elements in the worker node's general queue. If not, the worker node is done both the process of enqueuing management work elements in the storage node work to do queue and the process of dequeuing completed management work elements from its own work completed queue. QDS 10 and the worker node's queue are released in block 2130. Additionally, in block 2130, the worker node's access timer is started. The process terminates at end 2140.

If there are still management work elements in the worker node general queue as determined in decision 2070, a determination is made in decision 2080 whether the management work element is complete and posted to QDS 10. If the management work element is complete and posted, a determination is made in decision 2090 as to whether the caller has acknowledged the receipt of the completed and posted management work element. If receipt has been acknowledged, the management work element is completely removed from QDS 10 by zeroing the corresponding bit in allocation map 522 and writing updated control record 500 to QDS 10 in block 2100. The management work element is then freed from the worker node's general queue in block 2110. The loop shown in Fig. 13 is repeated until there are no more management work elements in the worker node general queue and a normal termination occurs at END 2140.

Storage Node-Retrieve Work To Do

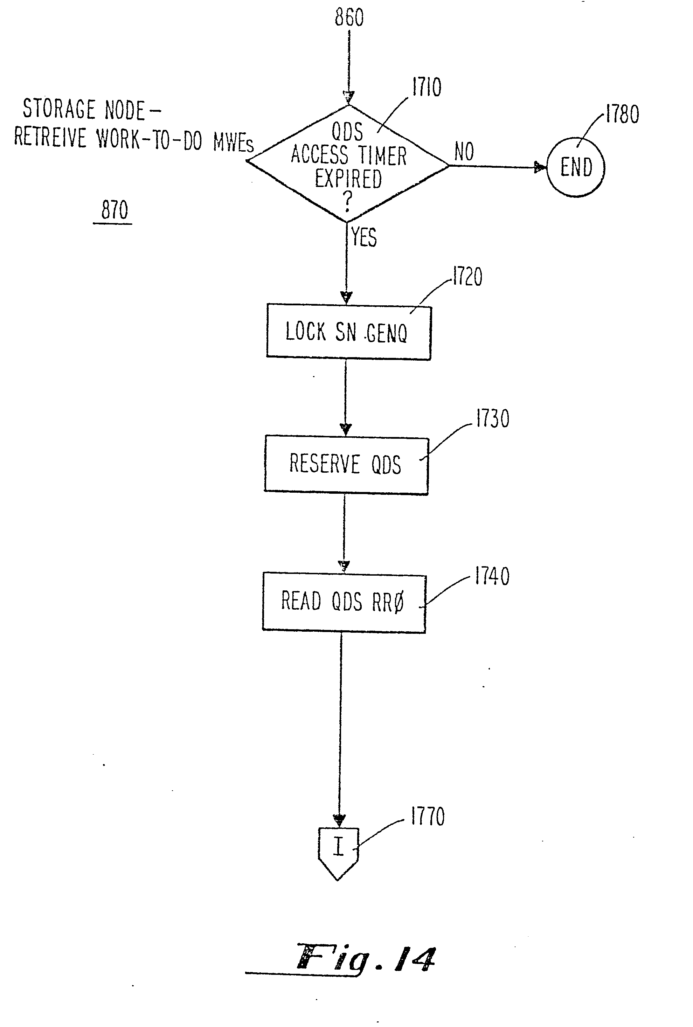

Referring now to Fig. 14, a flow chart diagram of the manner in which the storage node retrieve work to do management work elements is shown. This is a more detailed view of block 870 [storage node retrieve and process management work element] of Fig. 5. Execution proceeds from block 860 to decision 1710 in which a determination is made whether the storage node's access timer has expired. If the storage node's access timer has not expired, the storage node may not access QDS 10 and termination occurs at END 1780.

If the storage node's access timer has expired, the storage node is allowed access to QDS 10 and in block 1720 locks the storage node general queue to prevent tasks running in the storage node from interfering with the general queue while the storage node is accessing QDS 10. The storage node reserves QDS 10 in block 1730 locking out all worker nodes, and at block 1740 reads control record 500 from QDS 10. Execution then proceeds off page at offpage connector 1770.

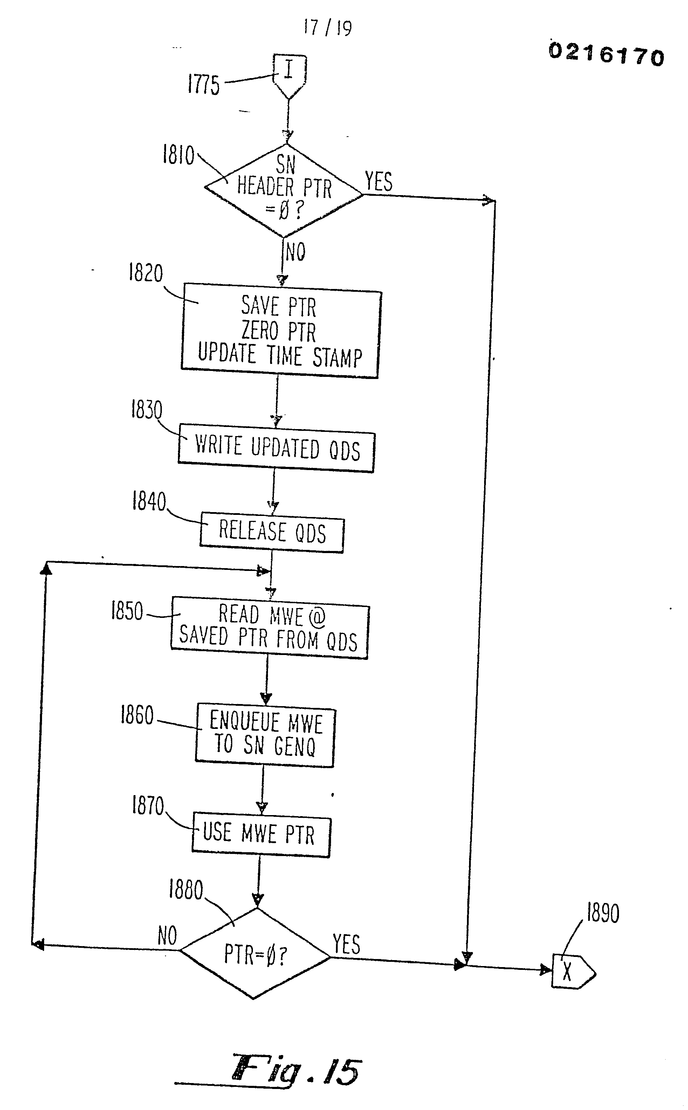

Referring now to Fig. 15, execution proceeds from offpage connector 1770 to onpage connector 1775. A determination is made at decision 1810 of whether the storage node work to do pointer within storage node pointer field 512 of control record 500 in QDS 10 is 0. If the storage node work to do pointer in pointer field 512 is 0, the storage node's work to do queue is empty and execution proceeds to offpage connector 1890. Additionally the determination made at decision 1810 helps to check for media failures which may render the contents of QDS 10 invalid.

If there are management work elements in the storage nodes work to do queue, as determined by decision 1810, the work to do pointer is saved and a 0 is placed in storage node work to do pointer field 512 in block 1820. The zeroing of pointer field 512 allows a new storage node work to do queue to be built by the worker nodes while the current work to do queue is being processed by the storage node.

Additionally in block 1820, the time stamp of time activity field 24 is updated. The updated version of QDS 10 is saved at block 1830 and QDS 10 is released by the storage node in block 1840. This release permits worker node access to QDS 10 to asynchronously build another storage node work to do queue and to retrieve completed management work elements. At block 1850 the management work element pointed-to by the pointer from storage node pointer field 512 which was saved by the storage node in block 1820 is read from QDS 10. This management work element is enqueued in the storage node's general queue in block 1860. The reason that the storage node can proceed with processing the work to do queue while the worker nodes have access to QDS 10 is that the processing of the storage node queue does not modify any pointers and there is thus no synchronous exposure.

In block 1870, relative record number field 544 of the management work element which was enqueued in the storage node general queue in block 1860 is read for use in determining whether there are any more management work elements in the queue and if so, where the next one is. Therefore, in decision 1880 a determination is made whether this pointer from relative record number field 544 is 0.

If the pointer is not 0, there is at least one more management work element in the queue and execution loops back to block 1850 to read this management work element. When executing block 1850 by way of decision 1880, the pointer from field 544 of the previous management work element is used to read the next management work element. If the pointer from field 544 of the last management work element enqueued in the storage node general queue is 0, there are no more management work elements in the storage node work to do queue, and execution proceeds from decision 1880 to offpage connector 1890.

## Storage Node-Complete Management Work Elements

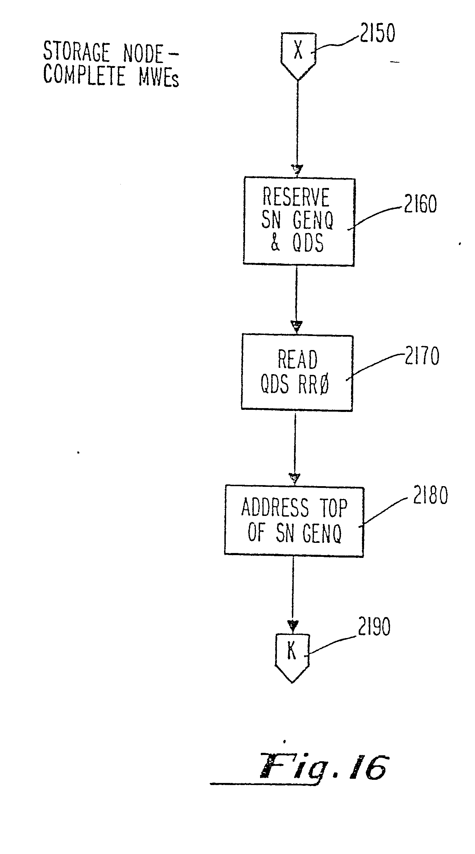

Referring now to Fig. 16, offpage connector 1890 of Fig. 15 connects with onpage connector 2150. Since QDS 10 is released by the storage node in block 1840, the storage node must again reserve QDS 10 in block 2160. The storage node must again read control record 500 in block 2170 and address the top of the storage node general queue in block 2180. Execution then proceeds off page at offpage connector 2190.

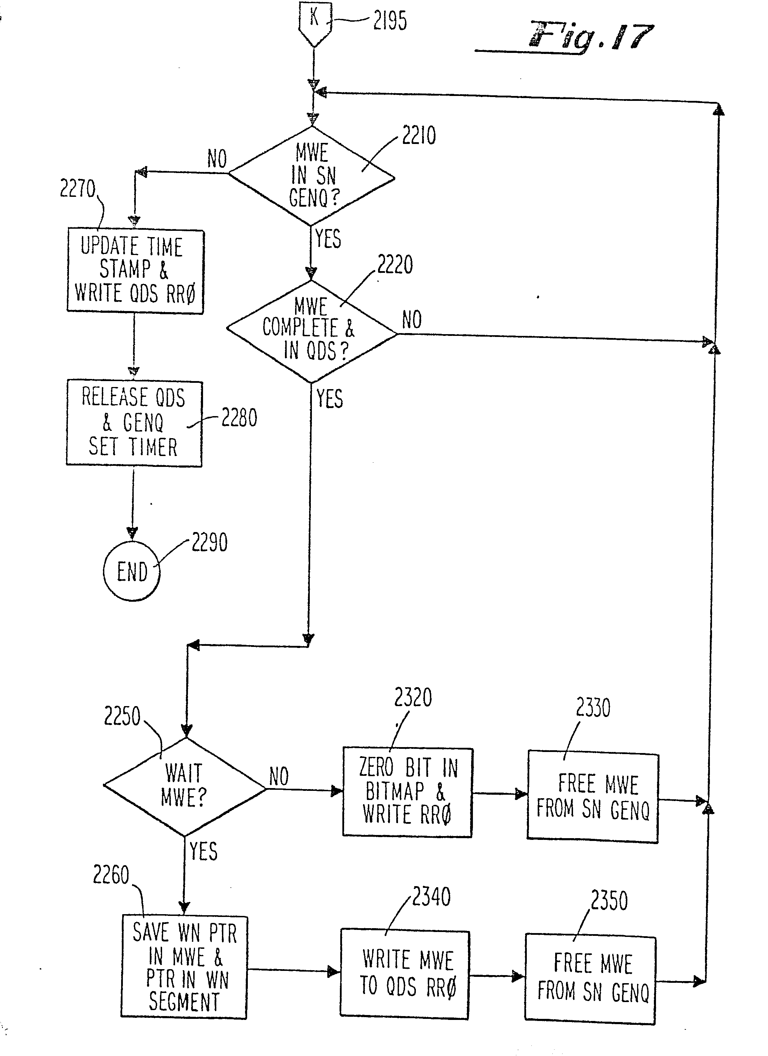

Referring now to Fig. 17, offpage connector 2190 of Fig. 16 connects with onpage connector 2195. At decision 2210, a determination is made whether there is a management work element in the storage node general queue. If there is a management work element in the storage node general queue, a determination is made in decision 2220 of whether the management work element is complete and is in QDS 10. If the management work element is complete and in QDS 10 a determination is made in decision 2250 whether the management work element is a wait-type management work element.

If the management work element is a wait-type work element, the pointer in the worker node pointer field of the appropriate worker node segment is saved in relative record number field 544 of the management work element being enqueued in that worker node's work completed queue in block 2260. Additionally the relative record number of the management work element enqueued is written into the pointer field of the appropriate worker node segment. For example, if the management work element was posted by worker node 1, the relative record number of the enqueued management work element is stored in pointer field 516.

The completed management work element is written to QDS 10 at the location saved in the worker node pointer field in block 2340 and updated control record 500 is saved at relative record zero of QDS 10. The management work element is dequeued from the storage node general queue in block 2350. Execution then loops to decision 2210 to determine whether there are any additional management work element in the storage node general queue.

If the management work element being processed is a no-wait-type management work element as determined by decision 2250, the bit in allocation map 522 corresponding to that management work element is zeroed in block 2320. Additionally, the management work element is stripped from the storage node general queue in block 2330. Execution then loops to decision 2210 to determine whether there are any additional management work elements in the storage node general queue as previously described.

When there are no more management work elements in the storage node general queue as determined by decision 2210, the time stamp of time activity field 524 is updated in block 2270 and control record 500 is written into relative record 0 of QDS 10. In block 2280 QDS 10 and the storage node general queue are released by the storage node and the storage node's access timer is set.  Execution then terminates at END 2290.

While the invention has been particulary shown and described with reference to preferred embodiments thereof, it will be understood by those skilled in the art that various changes in form and details may be made therein without departing from the spirit and scope of the invention.

1.      A method of storage management in a multiprocessor environment having at least a commonly accessible storage medium (100) which is accessible to all of the processors (200,210,220,230) in the multiprocessor system, comprising the steps of

a)      designating one of the processors (230) in the multiprocessor system as a storage node,

b)      designating the remaining processors (210,220,230) of the multiprocessor system as worker nodes,

c)      recognizing a service request originated by a process in a worker node;

d)      transmitting the service request to the commonly accessible storage medium, and

e)      retrieving the service request from the commonly accessible storage medium by the storage node and performing the requested service, whereby each of the worker nodes and the storage node communicate only through the storage medium.

2.      The method of Claim 1 including the additional step of transmitting a notification of the performance of the request by the storage node to the storage medium and retrieving the notification by the recognizing worker node.

3.      The method of Claim 1 in which the step of recognizing a service request includes the step of generating a service request comprising a communication data packet in response to the service request.

4.      The method of Claim 3 in which the step of  0216170
recognizing a service request includes the step of generating
a service request comprising a management work element in
response to the service request.

5.      The method of Claim 3 in which the step of
transmitting a request to the storage medium includes the
step of enqueuing the communication data packet on a storage
node queue in a queue data structure on the storage medium,
and adjusting a pointer within the communication data packet.

6.      The method of Claim 2 and 5 in which the step of
transmitting a notification of the performance of the
requested service includes enqueuing the communication data
packet in a worker node queue corresponding to the
recognizing worker node, in the queue data structure on the
storage medium, and adjusting a pointer in a worker node
pointer field in a control record of the queue data set.

7.      The method of Claim 5 in which the step of enqueuing
the communication data packet on the worker node queue
includes the steps of inserting the communication data packet
into an available record in the queue data structure and
adjusting a pointer in the storage node pointer field in a
control record of the queue data structure.

8.      The method of Claim 3 wherein the step of retrieving
the service request comprises the steps of:

        locating the communication data packet and

        reading the communication data packet into memory
associated with the storage node.

9.      The method of Claim 3 in which the step of
retrieving the service request includes the step of dequeuing
the communication data packet from the storage node queue.

10.     The method of Claim 1 in which the step of performing the needed service is performed by the storage node, the storage node having attached function subtasks, in which the step of performing the requested service includes the step of dispatching the request to a preselected function subtask, and in which the step of requesting includes requesting backup, migration, recall, or restore.

11.     The method of Claim 1 comprising the steps of:

a)     designating one of processors as a storage node, the storage node having exclusive access to at least one storage volume in addition to access to the commonly accessible storage volume;

b)     designating the remaining processors as worker nodes, each of the worker nodes having access to at least the commonly accessible storage volume;

c)     recognizing a need for performance of a storage management function by a worker node;

d)     transmitting a first signal representative of the required storage management function from the recognizing worker node to the commonly accessible storage volume;

e)     retrieving the first signal from the commonly accessible storage volume by the storage node;

f)     performing the needed storage management function by the storage node;

g)     transmitting a second signal representative of completion of the needed storage management function from the storage node to the commonly accessible storage volume;

h)      retrieving the second signal from the commonly accessible storage volume by the recognizing worker node.

12.     The method of Claim 11 wherein the first signal is transmitted from the recognizing worker node to a predetermined area of the commonly accessible storage volume and the second signal is transmitted from the storage node to that predetermined area of the commonly accessible storage volume.

13.     The method of Claim 11 wherein the second signal is transmitted from the storage node to a second predefined area of the commonly accessible storage volume.

14.     The method of Claim 11 wherein the storage volumes contain a plurality of data sets, each data set having a predetermined amount of space allocated to it, and wherein the step of performing the storage management function includes determining the allocation of storage space on the storage volumes to the data sets.

15.     The method of Claim 14 wherein the allocation-determining step includes copying of a data set on a storage volume to non-volatile storage media, copying of a data set from non-volative storage media to one of the storage volumes, copying a data set from a first storage volume which is a primary volume, to a second storage volume which is a secondary volume, and subsequently erasing the data set from the first storage volume, or copying a data set from a second storage volume which is a secondary volume, to a first storage volume which is a primary volume, and subsequently erasing the data set from the second storage volume.

16.     The method of Claim 14 wherein the allocation-determining step includes the storage node maintaining a record of space allocation to a plurality of data sets, the step of maintaining a record of space allocation includes storing the maintained record as a data set, and wherein the storage step includes storage of the record on the storage volume which is exclusively accessible to the storage node.

17.     The method of claim 1 including the additional steps of:

assigning a plurality of peripheral data storage volumes to the storage node for storing data for any of the processors;

establishing and maintaining a common work queue including a work queue in a one of the peripheral data storage devices the common work queue including a time stamp, and an indicator of storage node operability, the queue including wait type requests and no-wait type requests; and

operating the storage node to maintain the time stamp when it is operating with the assigned data storage volumes; when each of the worker nodes is accessing the common work queue to insert a request for access to data storage in the assigned peripheral data storage volumes, operating each worker node to examine the time stamp and the storage node operability indicator;

if the examination shows a predetermined elapsed time and storage node operability, then inserting the request into the work queue only if it is a wait type request, otherwise inserting the request into the common work queue if the storage node is operable.

18.      The method of Claim 17 in which the step of establishing a common work queue includes the step of establishing a queue data set including the common work queue and a worker node queue for each worker node.

19.      The method of Claim 17 in which the step of inserting a request for data storage includes enqueuing a request in the common work queue by adjusting a first queue pointer in the common work queue.

20.      The method of Claim 17 further including the steps of performing the request and inserting the performed service request into a worker node queue by adjusting a second queue pointer in the common work queue.

21. The method of Claim 1 including the step of establishing a queue data structure, the queue data structure including a plurality of pointers in a control record, a storage node queue and a worker node queue for each worker node.

22. The method of Claims 1 and 21 in which the step of transmitting the request includes enqueuing the request on the storage node queue by adjusting a first pointer in the control record, the step of retrieving the request includes dequeuing the service request by the storage node including adjusting a first pointer, the step of performing the requested service is followed by the step of enqueuing the request in the worker node queue of the originating worker node by adjusting a second pointer in the control record, and in which the step of enqueuing in the worker node queue is followed by the step of notifying the requesting process of completion of the request.

23. A storage management system in a multiprocessor environment having at least a commonly accessible storage means (100) which is accessible to all of the processors (200,210,220,230) in the multiprocessor system, comprising:

a plurality of worker node processor means (200, 210,220,230) for recognizing a service request originated by a process,

means for transmitting the service requests to the commonly accessible storage medium, and

storage node processor means (230) having means for retrieving the service requests from the commonly accessible storage means whereby the storage node processor means and the worker node processor means communicate only through the commonly accessible storage means,

the storage node processor means including service performance means (60) for performing the service requests.

24.     The system of Claim 23 in which the storage node processor means includes means for notifying the originating process of completion of the service request.

25.     The system of Claim 23 wherein the storage node processor means includes means for transmitting a notification of the performance of the service request to the commonly accessible storage means, and the worker node processor means including means for retrieving the notification.

_Fig. 1A_

_Fig. 1B_

0216170

<u>10</u>

| TIME | SN ID | PTR | WN1 ID | PTR | WN2 ID | PTR | ...... | ALLOCATION MAP | |
|------|-------|-----|--------|-----|--------|-----|--------|----------------|---|
| | | | | | | | | | 0 |
| | | | | | | | | | 1 |
| | | | | | | | | | 2 |
| | | | | | | | | | n |

_Fig. 2A_

<u>560</u>

| HOST ID | RRN | Q CONTROL | MWEFUNC |
|---------|-----|-----------|---------|

_Fig. 2B_

521617c

10

|  | 524 | 510 | 512 | 514 | 516 | 518 | 520 | 508 | 522 |  |
|---|---|---|---|---|---|---|---|---|---|---|
| 500 | TIME | SN ID | 15 | WN1 ID | 5 | WN2 ID | 17 | ..... | 1111 1111 1011 1011 01 | 0 |
| 560-14 | WN1 | | | 3 | | | 1 | | 3 | 1 |
| 562-22 | WN1 | | | 14 | | | 1 | | 2 | 2 |
| 564-13 | WN2 | | | 7 | | | 1 | | 7 | 3 |
| 566-15 | WN1 | | | 1 | | | 1 | | 5 | 4 |
| 568-26 | WN1 | | | 12 | | | 1 | | 3 | 5 |
| 570-11 | WN2 | | | 0 | | | 1 | | 6 | 6 |
| 572-12 | WN1 | | | 6 | | | 1 | | 5 | 7 |
| 574-31 | WN2 | | | 0 | | | 1 | | 5 | 8 |
| 576-00 | XXXX | | | XXXX | | | 0 | | XXXX | 9 |
| 578-23 | WN1 | | | 2 | | | 1 | | 7 | 10 |
| 580-24 | WN1 | | | 10 | | | 1 | | 2 | 11 |
| 582-25 | WN1 | | | 11 | | | 1 | | 3 | 12 |
| 584-00 | XXXX | | | XXXX | | | 0 | | XXXX | 13 |
| 586-21 | WN1 | | | 0 | | | 1 | | 5 | 14 |
| 588-16 | WN2 | | | 4 | | | 1 | | 3 | 15 |
| 590-00 | XXXX | | | XXXX | | | 0 | | XXXX | 16 |
| 592-32 | WN2 | | | 8 | | | 1 | | 7 | 17 |
|  | | 542 | | | 544 | | | 546 | 548 | |

_Fig. 2C_

INTERCONNECTED HSM
INITIALIZATION PROCESS

5/19

0216170

STARTUP — 600

PROGRAM INITIALIZATION & PARAMETER PROCESSING — 610

WN ? — 620

YES → SETUP OPERATOR COMMUNICATIONS — 630

NO → OPEN { BCDS MCDS OCDS } — 660

SETUP SPACE USE & MONITORING — 670

PROCESS STARTUP PARMS — 640

PROCESS EXIT LIST — 680

QUEUE INITIALIZATION (WORKER NODE) — 650

ATTACH HSM FUNCTION SUBTASKS — 690

SETUP OPERATOR COMMUNICATIONS — 700

QUEUE INITIALIZATION (STORAGE NODE) — 720

PROCESS STARTUP PARMS — 710

A — 730

*Fig. 3*

SHUTDOWN PROCESSING

A — 735

SHUTDOWN ? — 740

NO → B — 800

YES

DETACH HSM FUNCTION SUBTASKS — 750

CLOSE ALL IHSM CDSs — 760

TERMINATE QDS — 770

TERMINATE HSM — 780

STOP — 790

*Fig. 4*

0216170

B — 805

WORK TO DO ? — 820

WN ? — 810

WORK TO DO ? — 860

NO      YES      NO      YES      NO

RETRIEVE & PROCESS MWEs — 830

RETRIEVE & PROCESS MWEs — 870

RETRIEVE & COMPLETE MWEs — 850

UPDATE CDS — 880

DISPATCH MWE TO SUBTASK — 890

RETRIEVE & COMPLETE MWEs — 910

GET & PROCESS CONSOLE CMD — 920

WAIT FOR WORK TO DO OR WORK COMPLETE CMD — 930

A — 737

_Fig.5_

*Fig. 6*

640

940 — OPEN QDS

950 — RESERVE QDS

960 — READ RRØ (CONTROL)

WORKER NODE INITIALIZATION

650

970 — SNID = Ø ? — YES → 1020 ERROR-CLOSE & RELEASE QDS → 1030 END

NO

980 — COLD START ? — YES → WN SEGMENT EXISTS? 1040 — NO → C 1050

NO

YES

990 — HOT START ? — YES → WN SEGMENT EXISTS? 1060 — NO

NO

YES

1000 — WN SEGMENT EXISTS? — YES → D 1070

NO

1010 — FREE SEGMENT EXISTS? — YES → E 1080

NO

0216170

C —1055

PLACE HOST ID IN WN SEGMENT —1090

WRITE UPDATED QDS RRØ —1100

D —1075

E —1085

PLACE HOST ID IN WN SEGMENT 1110—

WRITE UPDATED QDS RRØ 1120—

1130 — WN WORK COMP. RRN ≠ Ø ?  NO / YES

1140 — POST WORK COMPLETE

RELEASE QDS & SET TIMER —1150

END —1160

*Fig.7*

0216170

STORAGE NODE INITIALIZATION
720

OPEN QDS — 1170

RESERVE QDS — 1180

READ QDS RRØ — 1190

COLD START ? — 1200

YES → ZERO QDS RRØ — 1310

NO

WARM START ? — 1210

YES → SNID= HSM HOSTID ? — 1240 → YES → F — 1250

NO

WTOR FOR FORCE — 1260

FORCE REPLY ? — 1270 → YES → G — 1280

NO

SNID= HSM HOSTID ? — 1220 → YES → END — 1230

NO

PLACE HSM HOSTID IN SN SEGMENT — 1320

UPDATE TIME STAMP & WRITE QDS RRØ — 1330

RELEASE QDS & SET ACCESS TIMER — 1340

END — 1350

ERROR- CLOSE & RELEASE QDS — 1290

END — 1300

*Fig.8*

0216170

F ─ 1255

G ─ 1285

PLACE HSM HOSTID IN SN SEGMENT ─ 1450

SCAN BITMAP & LOCATE "1" ─ 1360

1370
MWE FOUND ? — NO → UPDATE TIME STAMP & WRITE QDS RRØ ─ 1420 → RELEASE QDS & SET ACCESS TIMER ─ 1430

1440
END

YES

1380
COMPLETE MWE ?

YES

NO

PUT COMPLETE MWE IN WN COMPLETE Q ─ 1390

QUEUE MWE TO SN GEN Q ─ 1410

SCAN BITMAP FOR NEXT MWE ─ 1400

_Fig. 9_

0216170

WORKER NODE-RETREIVE MWEs

830

820

1460 → QDS ACCESS TIMER EXPIRED ? — NO → END 1540

YES

1470 → LOCK WN GENQ

1480 → RESERVE QDS

1490 → READ QDS RRØ

1500 → WN SEGMENT FOUND ? — NO → 

1510 → SNID=Ø ? — YES →

1560 → ERROR- CLOSE & RELEASE WN GENQ & QDS → 1570 END

NO

1520 → △ TIME STAMP < 5 MIN ? — NO → 1580 WTOR FOR WAIT-TYPE MWE CANCEL

YES

1530 H

*Fig.10*

_Fig. II_

13/19    0216170

Flowchart:

H — 1535

IS WN GENQ MWE ALREADY IN QDS ? — 1590
- YES →
- NO ↓

IS MWE A WAIT/CANCEL ? — 1600
- YES → REJECT MWE — 1700 →
- NO ↓

MUST MWE GO TO SN? — 1610
- NO →
- YES ↓

SCAN QDS BITMAP FOR "∅"-GET FREE RRN — 1620

SAVE MWE IN QDS-ENQUEUE AS SN WORK TO DO — 1630

WRITE UPDATED QDS RR∅ — 1670

IS MWE A NO WAIT? — 1640
- NO →
- YES ↓

DEQUEUE MWE FROM WN GENQ & NOTIFY CALLER — 1650

ANY MORE MWEs ON WN GENQ ? — 1660
- YES →
- NO → Z — 1680

WORKER NODE –
COMPLETE MWEs

Z ——1950

SAVE RRN ——1960
WNQ PTR

NOTIFY CALLER 2060
OF MWE
COMPLETE

SAVE PTR IN 2050
MWE & WRITE
QDS RRØ

1970
PTR=Ø
?
NO → READ MWE
@ PTR
→ COPY MWE
TO ORIGINAL
MWE IN GENQ

YES

2030

2040

ADDRESS TOP ——1980
OF GENQ

J ——1990

*Fig.12*

J — 2120

MWE IN GENQ? — 2070

NO → RELEASE QDS & GENQ SET ACCESS TIMER — 2130

YES

MWE COMPLETE & POSTED TO QDS? — 2080

NO

YES

HAS CALLER ACKNOWLEDGED RECEIPT? — 2090

NO

YES

ZERO BIT IN BITMAP & WRITE QDS RR0 — 2100

FREE MWE FROM GENQ — 2110

END — 2140

_Fig. 13_

0216170

STORAGE NODE—
RETREIVE WORK-TO-DO MWEs

<u>870</u>

860

1710

QDS
ACCESS TIMER
EXPIRED
?

NO → END 1780

YES

LOCK SN GENQ 1720

RESERVE QDS 1730

READ QDS RRØ 1740

I 1770

<u>Fig.14</u>

0216170

1775 — [ I ]

1810 — SN HEADER PTR =Ø ?  → YES

NO

1820 — SAVE PTR ZERO PTR UPDATE TIME STAMP

1830 — WRITE UPDATED QDS

1840 — RELEASE QDS

1850 — READ MWE @ SAVED PTR FROM QDS

1860 — ENQUEUE MWE TO SN GENQ

1870 — USE MWE PTR

1880 — PTR=Ø ?   NO / YES

1890 — [ X ]

_Fig.15_

0216170

STORAGE NODE—
COMPLETE MWEs

X — 2150

RESERVE
SN GENQ
& QDS — 2160

READ
QDS RRØ — 2170

ADDRESS TOP
OF SN GENQ — 2180

K — 2190

*Fig. 16*

0216170

*Fig.17*

Flowchart:

K — 2195

MWE IN SN GENQ? — 2210
- NO → UPDATE TIME STAMP & WRITE QDS RRØ — 2270 → RELEASE QDS & GENQ SET TIMER — 2280 → END — 2290
- YES → MWE COMPLETE & IN QDS? — 2220
  - NO → (to right)
  - YES → WAIT MWE? — 2250

WAIT MWE? — 2250
- NO → ZERO BIT IN BITMAP & WRITE RRØ — 2320 → FREE MWE FROM SN GENQ — 2330
- YES → SAVE WN PTR IN MWE & PTR IN WN SEGMENT — 2260 → WRITE MWE TO QDS RRØ — 2340 → FREE MWE FROM SN GENQ — 2350